# FASCICULE DE BREVET EUROPEEN

(11) **EP 3 638 503 B1**
(45) Date de publication et mention de la délivrance du brevet: **28.07.2021**
(21) Numéro de dépôt: 18749418.2
(22) Date de dépôt: 05.06.2018
(51) Int. Cl.: B32B 7/12, B32B 25/04, B32B 25/08, B32B 25/16, B32B 27/08, B32B 27/22, B32B 27/30, B32B 27/32, B60C 19/12, B60C 1/00

(54) **STRATIFIE MULTICOUCHE**
MEHRSCHICHTIGES LAMINAT
MULTILAYER LAMINATE

(30) Priorité: 13.06.2017 FR 1755320
(43) Date de publication de la demande: 22.04.2020
(73) Titulaire: Compagnie Générale des Etablissements Michelin, 63000 Clermont-Ferrand (FR)
(72) Inventeur: ABAD, Mathilde, 63040 Clermont-Ferrand Cedex 9 (FR); GONZALEZ, David, 63040 Clermont-Ferrand Cedex 9 (FR)
(74) Mandataire: Wroblewski, Nicolas Paul André
(86) Numéro de dépôt international: PCT/FR2018/051290
(87) Numéro de publication internationale: WO 2018/229387

(56) Documents cités:
- WO-A1-2009/156049
- FR-A1- 3 039 785

## Description

La présente invention est relative à un stratifié multicouche élastomérique présentant des propriétés d'étanchéité aux gaz de gonflage et des propriétés anti-crevaison ainsi que son utilisation dans un objet pneumatique tel que par exemple un bandage pneumatique.

De manière générale, un objet pneumatique tel qu'un bandage pneumatique comprend une couche interne d'étanchéité délimitant son volume interne. Cette couche comprend généralement une composition à base de caoutchouc butyle connue pour être imperméable aux gaz de gonflage tel que l'air.

Lors de son utilisation, l'objet pneumatique peut subir une perforation suite à la pénétration d'un objet perforant comme par exemple un clou ou une vis. Cette perforation entraîne une fuite des gaz de gonflage. La perte de pression consécutive à cette perforation rend l'objet pneumatique inutilisable. Dans le cas d'un bandage pneumatique, une perforation entraine la mise à plat du bandage, l'arrêt du véhicule et le remplacement de la roue concernée par une roue de secours.

Afin de résoudre ce problème de crevaison, une des nombreuses solutions existantes consiste à ajouter sur la paroi interne de l'objet pneumatique une couche supplémentaire d'une composition relativement souple et pouvant fluer facilement. Ainsi lors d'une perforation, la composition de la couche supplémentaire, en raison de sa souplesse et de sa capacité à fluer facilement, pénètre dans la perforation, referme cette perforation et évite la perte de pression consécutive à cette perforation. Une telle composition est dite auto-obturante (ou « self-sealing » en anglais).

Les compositions auto-obturantes sont généralement associées à la couche interne d'étanchéité lors de la confection de l'objet pneumatique en utilisant une couche adhésive entre ces deux couches. L'assemblage de ces couches forme un stratifié élastomérique. Le document WO2009/156049A1 décrit, par exemple, un stratifié élastomère multicouche étanche à l'air et anti-crevaison comportant trois couches, une première couche étanche à l'air à base de caoutchouc butyle, une couche adhésive constituée d'un élastomère SIS (élastomère thermoplastique styrène/isobutylène/styrène) et d'une couche auto-obturante constitué d'un élastomère SEBS (élastomère thermoplastique styrénique/éthylène/butylène/styrène) et de 550 pce d'huile d'extension.

Généralement lorsque l'objet pneumatique est un bandage pneumatique, les stratifiés sont formés avant la cuisson de ce bandage pneumatique par superposition de la couche étanche à l'air, de la couche adhésive et de la couche auto-obturante. Puis, le bandage pneumatique est cuit. Cette cuisson est nécessaire pour que l'adhésion des couches puisse s'effectuer. En général cette adhésion se fait grâce à la formation d'un système de réticulation entre les doubles liaisons carbone-carbone (ou insaturation) de l'élastomère de la couche adhésive et de l'élastomère de la couche étanche à l'air.

Toutefois, ce procédé de fabrication du stratifié et du bandage pneumatique peut s'avérer long et ne s'adapte pas facilement à des bandages pneumatiques cuits, c'est-à-dire à la pose de la couche auto-obturante après cuisson dudit bandage pneumatique.

De plus, un des problèmes rencontrés lors du procédé de fabrication d'un bandage pneumatique est dû à la nature de la couche auto-obturante qui peut adhérer à la membrane de la presse de cuisson pendant la phase de cuisson (aussi appelée phase de vulcanisation ou de réticulation) et donc endommager cette membrane.

Pour pallier ce problème, une solution envisagée consiste à placer un film protecteur entre la couche auto-obturante et les outils d'assemblage de l'ébauche du bandage pneumatique. Après vulcanisation, il est alors nécessaire de retirer ce film protecteur. Or, l'utilisation de ces films pose plusieurs problèmes : ils induisent au moins deux étapes supplémentaires dans le procédé de fabrication d'un bandage pneumatique : une étape de pose lors de la fabrication du bandage pneumatique avant la cuisson et une étape de retrait une fois que le bandage pneumatique a été vulcanisé. En outre, lors du retrait du film protecteur, des fragments de la couche auto-obturante peuvent rester sur ce film provoquant une discontinuité de la couche auto-obturante sur la paroi interne du bandage pneumatique.

Ainsi, il existe un besoin de simplifier le procédé de fabrication d'un stratifié comprenant une couche étanche aux gaz de gonflage et une couche auto-obturante et notamment de disposer d'un stratifié dont la couche auto-obturante puisse adhérer sur un objet pneumatique déjà cuit et donc sur une couche étanche aux gaz de gonflage préalablement vulcanisée.

Dans le but d'améliorer les stratifiés comprenant une couche étanche aux gaz de gonflage et une couche auto-obturante et dans le but de simplifier les procédés de fabrication d'un objet pneumatique (notamment d'un bandage pneumatique), la Demanderesse a trouvé qu'une composition à base d'au moins un élastomère thermoplastique styrénique spécifique, d'au moins une polyoléfine spécifique et d'au moins une huile d'extension spécifique à un taux élevé favorise l'adhésion d'une couche auto-obturante sur une couche étanche aux gaz de gonflage qui peut notamment avoir été au préalable réticulée. Cette composition sert de couche de liaison et permet d'obtenir un stratifié multicouche palliant les inconvénients précités.

Ainsi, un premier objet de la présente invention concerne un stratifié pour objet pneumatique comportant au moins trois couches différentes et superposées:
- une couche étanche aux gaz de gonflage constituée d'une composition à base d'au moins un élastomère diénique et d'au moins un système de réticulation, le taux d'élastomère diénique étant compris dans un domaine allant de de 50 à 100 pce ;
- une couche de liaison constituée d'une composition à base d'au moins un élastomère thermoplastique styrénique, d'au moins une polyoléfine ayant une masse molaire moyenne en nombre Mn allant de 10000 à 550000 g/mol et d'au moins 140 pce d'une huile d'extension ayant une masse moyenne en nombre Mn inférieure ou égale à 5000 g/mol ;
- une couche auto-obturante constituée d'une composition à base d'au moins un élastomère thermoplastique styrénique et d'au moins 140 pce d'une huile d'extension ayant une masse moyenne en nombre Mn inférieure ou égale à 5000 g/mol ; le taux d'élastomère thermoplastique styrénique étant compris dans un domaine allant de 50 à 100 pce ; et
ladite couche de liaison étant disposée entre ladite couche étanche aux gaz de gonflage et ladite couche auto-obturante.

Le stratifié conforme à l'invention permet d'avoir une adhésion satisfaisante entre la couche étanche aux gaz de gonflage et la couche auto-obturante. Par rapport aux solutions de l'art antérieur, l'invention est beaucoup plus simple à mettre en œuvre puisqu'il n'est pas nécessaire d'utiliser un film de protection ; la couche auto-obturante grâce à la couche de liaison pouvant adhérer sur une couché étanche aux gaz de gonflage, notamment lorsque cette dernière est réticulée (ou cuite ou vulcanisée). En s'affranchissant de film protecteur, on économise des matériaux et on simplifie le procédé de fabrication d'un objet pneumatique, tel qu'un bandage pneumatique. Par ailleurs, l'invention présente l'avantage supplémentaire de ne pas abimer les membranes des presses de cuisson.

Ainsi, un autre objet de la présente invention concerne l'utilisation d'un stratifié tel que défini ci-dessus comme paroi interne d'un objet pneumatique comme, par exemple, un bandage pneumatique.

L'invention a également pour objet un objet pneumatique comprenant un stratifié tels que défini ci-dessus, de préférence cet objet est un bandage pneumatique.

Un autre objet de l'invention concerne l'utilisation d'une couche de liaison pour fixer une couche auto-obturante sur une couche étanche aux gaz de gonflage, utilisation dans laquelle :
- ladite couche de liaison est constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol,
- ladite couche étanche aux gaz de gonflage est constituée d'une composition à base d'au moins un élastomère diénique et d'au moins un système de réticulation, le taux d'élastomère diénique étant compris dans un domaine allant de de 50 à 100 pce ; et
- la couche auto-obturante constituée est d'une composition à base d'au moins un élastomère thermoplastique styrénique et d'au moins 140 pce d'une huile d'extension ayant une masse moyenne en nombre Mn inférieure ou égale à 5 000 g/mol ; le taux d'élastomère thermoplastique styrénique étant compris dans un domaine allant de 50 à 100 pce.

L'invention concerne également un procédé de fixation d'une couche auto-obturante sur la paroi interne d'un objet pneumatique, ladite couche auto-obturante étant constituée d'une composition à base d'au moins un élastomère thermoplastique styrénique et d'au moins 140 pce d'une huile d'extension ayant une masse moyenne en nombre Mn inférieure ou égale à 5000 g/mol ; le taux dudit élastomère thermoplastique styrénique étant compris dans un domaine allant de 50 à 100 pce , procédé dans lequel :
(a) on dispose d'un objet pneumatique dont la paroi interne est faite d'une couche étanche gaz de gonflage constituée d'une composition à base d'au moins un élastomère diénique et d'au moins un système de réticulation, le taux d'élastomère diénique étant compris dans un domaine allant de de 50 à 100 pce;
(b) on applique une couche de liaison sur ladite paroi interne ;
(c) on applique ladite couche auto-obturante sur ladite couche de liaison en mettant en contact ladite couche auto-obturante et ladite couche de liaison,
ladite couche de liaison étant constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol.

### 1. - DESCRIPTION DES FIGURES

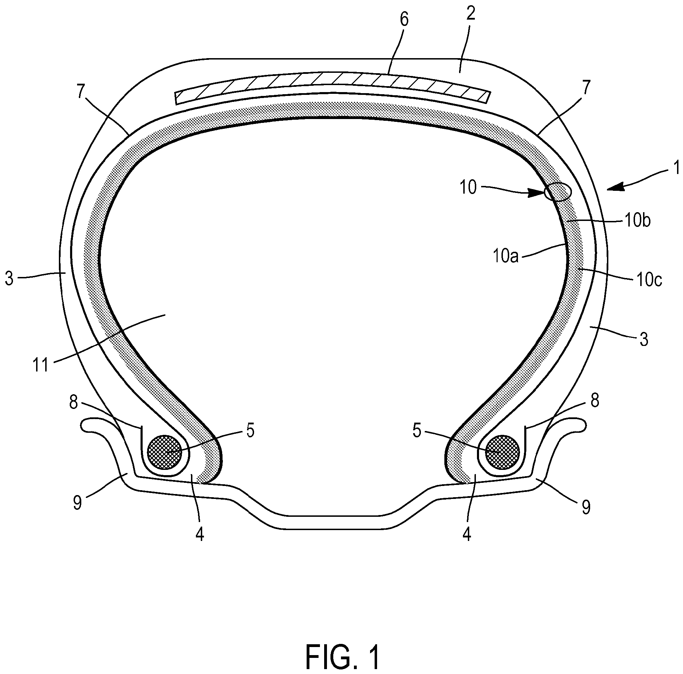

La figure 1 représente de manière schématique (sans respecter une échelle spécifique) une coupe radiale d'un bandage pneumatique incorporant un stratifié multicouche conforme à l'invention.

### 2. - METHODES UTILISEES

### 2.1 - Méthode de mesure de la masse molaire moyenne en nombre, de la masse molaire moyenne en poids et de l'indice de polydispersité.

La masse molaire moyenne en nombre (Mn), la masse molaire moyenne en poids (Mw) et l'indice de polydispersité (Ip) des constituants utilisables dans les compositions des couches du stratifié conforme à l'invention (élastomère thermoplastique styrénique, huile d'extension, polyoléfine, ...), sont déterminés de manière connue, par chromatographie d'exclusion stérique (SEC : Size Exclusion Chromatography) triple détection. Cette technique présente l'avantage de mesurer des masses molaires moyennes directement sans calibration.

On détermine dans un premier temps l'incrément d'indice de réfraction dn/dc de l'échantillon (i.e. du constituant de la composition dont on souhaite déterminer la Mn et le cas échéant la Mw et l'Ip). Pour cela, l'échantillon est préalablement solubilisé dans du tétrahydrofurane à différentes concentrations connues précisément (0,5 g/L; 0,7 g/L; 0,8 g/L; 1 g/L et 1,5 g/L) ; puis chaque solution est filtrée sur filtre de porosité 0,45 µm. Chaque solution est ensuite injectée directement à l'aide d'un pousse seringue dans un réfractomètre différentiel Wyatt de dénomination commerciale « OPTILAB T-REX » de longueur d'onde 658 nm et thermostaté à 35°C. Pour chaque concentration est mesuré l'indice de réfraction par le réfractomètre. Le logiciel ASTRA de chez Wyatt réalise une droite du signal du détecteur en fonction de la concentration de l'échantillon. Le logiciel ASTRA détermine automatiquement le coefficient directeur de la droite correspondant à l'incrément d'indice de réfraction de l'échantillon dans du tétrahydrofurane à 35°C (d*n*/d*c*) et à la longueur d'onde de 658 nm.

Pour déterminer les masses molaires moyennes, on utilise la solution de l'échantillon à 1 g/l précédemment préparée et filtrée que l'on injecte dans le système chromatographique. L'appareillage utilisé est une chaîne chromatographique « WATERS alliance ». Le solvant d'élution est le tétrahydrofurane antioxydé, avec du BHT (2,6-diter-butyle 4-hydroxy toluène) de 250 ppm, le débit est de 1 mL.min⁻¹, la température du système de 35° C et la durée d'analyse de 60 min. Les colonnes utilisées sont un jeu de trois colonnes AGILENT de dénomination commerciale « PL GEL MIXED B LS». Le volume injecté de la solution de l'échantillon est 100 µL. Le système de détection est composé d'un viscosimètre différentiel Wyatt de dénomination commerciale « VISCOSTAR II », d'un réfractomètre différentiel Wyatt de dénomination commerciale « OPTILAB T-REX » de longueur d'onde 658 nm, d'un détecteur à diffusion de lumière statique multi angle Wyatt de longueur d'onde 658 nm et de dénomination commerciale « DAWN HELEOS 8+ ».

Pour le calcul de Mn, Mw et Ip, est intégrée la valeur de l'incrément d'indice de réfraction d*n*/d*c* de la solution de l'échantillon à 1 g/L obtenue ci-dessus. Le logiciel d'exploitation des données chromatographiques est le système « ASTRA de Wyatt ».

### 2.2 - Méthode de mesure des épaisseurs des différentes couches du stratifié

La mesure des épaisseurs des différentes couches du stratifié s'effectue selon toute méthode usuelle connue de l'homme du métier.

Par exemple, on dispose d'un échantillon (2 cm ^{∗} 2 cm) du stratifié multicouche que l'on pose sur un support d'observation magnétique semi-sphérique d'un stéréomicroscope Leica M205C. On observe le stratifié couche par couche afin de mesurer l'épaisseur de chacune des couche du stratifié.

### 2.3 - Méthode de mesure de la température de transition vitreuse Tg des polymères

La température de transition vitreuse Tg (ci-après appelée Tg) est mesurée de manière connue par DSC (Differential Scanning Calorimetry) selon la norme ASTM D3418 de 1999.

### 3. - DESCRIPTION DETAILLEE DE L'INVENTION

L'invention ainsi que ses avantages seront aisément compris à la lumière de la description, de la figure et des exemples de réalisation.

Dans la présente description, sauf indication expresse différente, tous les pourcentages (%) indiqués sont des pourcentages en masse.

D'autre part, tout intervalle de valeurs désigné par l'expression « entre a et b » représente le domaine de valeurs allant de plus de « a » à moins de « b » (c'est-à-dire bornes a et b exclues) tandis que tout intervalle de valeurs désigné par l'expression « de a à b » signifie le domaine de valeurs allant de « a » jusqu'à « b » (c'est-à-dire incluant les bornes strictes a et b).

Dans la présente demande, on entend par « partie pour cent d'élastomère » ou « pce » (usuellement « phr » en anglais) la partie en poids d'un constituant pour cent parties en poids d'élastomères, tous les élastomères étant confondus, thermoplastiques ou non thermoplastiques, diénique ou oléfiniques...

Dans le cadre de l'invention, les produits carbonés mentionnés dans la description peuvent être d'origine fossile ou biosourcée. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### 3.1 - Stratifié multicouche

Un premier objet de la présente invention concerne un stratifié pour objet pneumatique comportant au moins trois couches différentes et superposées:
- une couche étanche aux gaz de gonflage constituée d'une composition à base d'au moins un élastomère diénique et d'au moins un système de réticulation, le taux d'élastomère diénique étant compris dans un domaine allant de de 50 à 100 pce ;
- une couche de liaison constituée d'une composition à base d'au moins un élastomère thermoplastique styrénique, d'au moins une polyoléfine ayant une masse molaire moyenne en nombre Mn allant de 10000 à 550000 g/mol et d'au moins 140 pce d'une huile d'extension ayant une masse moyenne en nombre Mn inférieure ou égale à 5000 g/mol ;
- une couche auto-obturante constituée d'une composition à base d'au moins un élastomère thermoplastique styrénique et d'au moins 140 pce d'une huile d'extension ayant une masse moyenne en nombre Mn inférieure ou égale à 5000 g/mol ; le taux d'élastomère thermoplastique styrénique étant compris dans un domaine allant de 50 à 100 pce ; et
ladite couche de liaison étant disposée entre ladite couche étanche aux gaz de gonflage et ladite couche auto-obturante.

Par « composition à base de » au sens de la présente invention, il faut entendre une composition comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de son extrusion ou lors de la phase de mélange.

Par « couches différentes » au sens de la présente invention, on entend des couches ayant des compositions non identiques (c'est-à-dire dont les constituants sont différents d'une composition d'une couche à l'autre) ou bien des couches dont les compositions sont identiques mais dont l'épaisseur des couches est différente.

Dans la suite la description, le stratifié conforme à l'invention sera appelé indifféremment stratifié multicouche ou stratifié.

Les détails de l'invention seront explicités ci-dessous, par la description dans un premier temps de la couche étanche aux gaz de gonflage, puis des constituants communs éventuels aux deux autres couches du stratifié multicouche. Dans un deuxième temps, les éléments spécifiques de chacune des deux autres couches de ce stratifié sont décrits ainsi que la fabrication individuelle des couches, puis enfin le procédé d'obtention du stratifié selon l'invention.

### 3.1.1. - Couche étanche aux gaz de gonflage

Comme indiqué précédemment, le stratifié multicouche conforme à l'invention comprend au moins une couche étanche aux gaz de gonflage est constituée d'une composition à base d'au moins un élastomère diénique et d'au moins un système de réticulation, le taux d'élastomère diénique étant compris dans un domaine allant de de 50 à 100 pce.

Dans un mode de réalisation préféré de l'invention, le stratifié multicouche conforme à l'invention comprend au moins une couche réticulée étanche aux gaz de gonflage.

Par « couche réticulée » au sens de la présente invention, on entend une couche constitué d'une composition élastomérique diénique ayant subie une étape de réticulation, aussi appelée cuisson ou vulcanisation. A l'issue de cette étape, les doubles liaisons carbone-carbone (aussi appelées insaturations) de l'élastomère diénique de cette couche ont formé un réseau tridimensionnel entre les chaînes macromoléculaire de l'élastomère. On peut s'assurer qu'une couche a été réticulée en plaçant la couche dans un solvant connu pour dissoudre les élastomères non réticulés de même nature chimique. Si la couche ne se dissout pas, l'homme du métier sait qu'elle est réticulée.

L'homme de l'art saura, à la lumière de la présente description ajuster la formulation de la composition de la couche étanche aux gaz de gonflage afin d'atteindre les niveaux de propriétés souhaités et adapter à la formulation à l'application envisagée.

### • Elastomère diénique

Par élastomère (ou « caoutchouc », les deux termes étant considérés comme synonymes) du type « diénique », on rappelle ici que doit être compris de manière connue un (on entend un ou plusieurs) élastomère issu au moins en partie (c'est-à-dire un homopolymère ou un copolymère) de monomère(s) diène(s) (i.e., porteur(s) de deux doubles liaisons carbone-carbone, conjuguées ou non).

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux molaire de motifs ou unités d'origine diénique (diènes conjugués) qui est supérieur à 15 % (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés » (taux molaire de motifs d'origine diénique faible ou très faible, toujours inférieur à 15 % (% en moles)). Dans la catégorie des élastomères diéniques « essentiellement insaturés », on entend en particulier par élastomère diénique « fortement insaturé » un élastomère diénique ayant un taux molaire de motifs d'origine diénique (diènes conjugués) qui est supérieur à 50 % (% en moles).

Ces définitions étant données, on entend plus particulièrement par élastomère diénique susceptible d'être utilisé dans les compositions de caoutchouc conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère, notamment diénique, l'homme du métier comprendra que pour une utilisation en tant que couche étanche aux gaz de gonflage, la présente invention est de préférence mise en œuvre avec des élastomères diéniques essentiellement saturés, en particulier avec les élastomères du type (d).

Dans le cas de copolymères (b), ceux-ci peuvent contenir de 20 % à 99 % en poids d'unités diéniques et de 1 % et 80 % en poids d'unités vinylaromatiques.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial « vinyle-toluène », le para-tertiobutylstyrène, les méthoxystyrènes, les chlorostyrènes, le vinylmésitylène, le divinylbenzène, le vinylnaphtalène.

Préférentiellement, l'élastomère diénique de la composition de la couche étanche aux gaz de gonflage peut être choisi dans le groupe constitué par les polybutadiènes (en abrégé « BR »), les polyisoprènes (en abrégé « IR ») de synthèse, le caoutchouc naturel (en abrégé «NR»), les copolymères de butadiène, les copolymères d'isoprène et les mélanges de ces élastomères.

De tels copolymères sont plus préférentiellement choisis dans le groupe constitué par les copolymères d'isoprène et d'isobutène et les mélange de ces copolymères.

Préférentiellement, l'élastomère diénique de la composition de la couche étanche aux gaz de gonflage est choisi dans le groupe des copolymères d'isoprène et d'isobutène, les copolymères halogénés d'isoprène et d'isobutène et les mélanges de ces copolymères. Ce type de copolymères est aussi appelé caoutchouc butyle.

On citera à titre d'exemples de caoutchouc butyle convenant particulièrement à une utilisation dans une couche étanche aux gaz de gonflage : les copolymères d'isobutylène et d'isoprène (IIR), les caoutchoucs bromobutyle tels que le copolymère bromoisobutylène-isoprène (BIIR) et les caoutchoucs chlorobutyle tels que le copolymère chloroisobutylène-isoprène (CIIR).

Le taux d'élastomère diénique dans la composition de la couche étanche aux gaz de gonflage est compris dans un domaine allant de 50 à 100 pce, de préférence dans un domaine allant de 70 à 100 pce.

De préférence, le taux d'élastomère diénique dans la composition de la couche étanche aux gaz de gonflage est compris dans un domaine allant de 70 à 100 pce et l'élastomère diénique est choisi dans le groupe constitué par les copolymères d'isoprène et d'isobutylène, les copolymères halogénés d'isoprène et d'isobutylène et les mélanges de ces copolymères.

### • Charge renforçante

La composition de la couche étanche aux gaz de gonflage peut comprendre en outre une charge renforçante. On entend de manière connue par « charge renforçante », une charge connue pour ses capacités à renforcer une composition de caoutchouc utilisable pour la fabrication d'objets pneumatiques, tels que les bandages pneumatiques.

On peut utiliser dans la composition de la cette couche toute charge renforçante connue de l'homme du métier telle qu'une charge renforçante inorganique ou une charge organique comme par exemple du noir de carbone.

De préférence, la charge renforçante comprend une charge renforçante organique.

Plus préférentiellement, la charge renforçante comprend du noir de carbone.

Le noir de carbone peut être utilisé seul ou en association avec une ou plusieurs autres charges renforçantes ou non renforçantes telles que décrites ci-dessous. Par exemple, le noir de carbone peut être utilisé avec une charge renforçante inorganique telle que la silice.

De préférence, la charge renforçante comprend majoritairement du noir de carbone.

Par « majoritairement » ou « majoritaire » en liaison avec un composé, on entend que ce composé est majoritaire parmi les composés du même type dans la composition ; c'est-à-dire que c'est celui qui présente la plus grande fraction pondérale parmi les composés du même type. Ainsi par exemple, une charge dite majoritaire est celle représentant la plus grande fraction pondérale par rapport au poids total de l'ensemble des charges de la composition. Ainsi, préférentiellement, la charge renforçante comprend au moins 51 % en poids de noir de carbone par rapport au poids total de la charge renforçante, plus préférentiellement au moins 60 % en poids, plus préférentiellement encore au moins 80 % en poids.

De préférence, la charge renforçante est constituée de noir de carbone.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

De préférence, la charge renforçante comprend une charge renforçante inorganique.

Par « charge inorganique renforçante », doit être entendu dans la présente demande, par définition, toute charge inorganique ou minérale (quelles que soient sa couleur et son origine (naturelle ou de synthèse), encore appelée charge « blanche », charge « claire » voire « charge non noire » (« non-black filler ») par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Peuvent notamment être utilisées des silices dites hautement dispersibles (dites « HDS ») telles que par exemple les silices Ultrasil 7000 de la société Evonik, les silices Zeosil® 1165 MP et Zeosil® 1115 MP de la société Solvay, la silice Zeosil® Premium 200MP de la société Solvay, la silice Hi-Sil EZ150G de la société PPG, les silices Zeopol 8715, 8745 ou 8755 de la Société Huber, les silices telles que décrites dans les demandes WO03/016215 et WO03/016387. La surface spécifique BET et la surface spécifique CTAB sont mesurées selon la méthode décrite respectivement dans la norme NF ISO 5794-1, annexe E de juin 2010 et annexe G de juin 2010.

Lorsque la charge renforçante comprend de la silice, on utilise on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique. De tels agents de couplage, notamment silice/élastomère ont été décrits dans un très grand nombre de documents, les plus connus étant des organosilanes bifonctionnels porteurs de fonction alkoxyle (c'est-à-dire, par définition des « alkoxysilanes ») et de fonctions capables de réagir avec l'élastomère diénique telles que par exemple des fonctions polysulfure.

### • Autres charges

De préférence, la composition de la couche étanche aux gaz de gonflage comprend en outre une charge non-renforçante (aussi appelée charge inerte).

Cette charge peut se présenter sous forme lamellaire.

Préférentiellement, la charge non-renforçante est choisie dans le groupe constitué par les microparticules de carbonates de calcium naturels (craie) ou synthétiques, les silicates synthétiques ou naturels (tels que kaolin, talc, mica, cloisite), les oxydes de titane, les alumines, les aluminosilicates (argile, bentonite) et les mélanges de ces charges.

Préférentiellement, la charge non-renforçante est choisie parmi le groupe constitué par la craie (naturelle ou synthétique), le talc, le kaolin et leurs mélanges.

De préférence, la composition de la couche étanche aux gaz de gonflage comprend en outre une charge semi-renforçante.

Les charges semi-renforçantes ne sont pas capables de renforcer à elles seules une composition comprenant un élastomère diénique destinée à la fabrication de bandages pneumatiques, en d'autres termes elles ne sont pas aptes à remplacer dans sa fonction de renforcement, un noir de carbone conventionnel de grade pneumatique, cependant elles permettent une augmentation du module en traction d'une composition de caoutchouc dans laquelle elles sont incorporées, c'est pourquoi on les nomme « semi-renforçante ». A titre de charge semi-renforçante éventuellement présente dans la composition de la couche étanche aux gaz de gonflage, on peut notamment citer du graphite.

### • Système de réticulation

On peut utiliser tout type de système de réticulation connu de l'homme du métier.

De préférence, le système de réticulation est un système de vulcanisation. Un système de vulcanisation est un système à base de soufre (ou d'un agent donneur de soufre) et d'un accélérateur primaire de vulcanisation. A ce système de vulcanisation de base peuvent venir s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents.

### • Fonction de la couche étanche aux gaz de gonflage

La couche étanche aux gaz de gonflage permet le gonflement et le maintien sous pression d'un objet pneumatique, notamment d'un bandage pneumatique.

Par « objet pneumatique », on entend au sens de la présente invention tout objet qui prend sa forme utilisable quand on le gonfle avec un gaz (ou des gaz) de gonflage tel que l'air par exemple.

A titre d'exemples de tels objets pneumatiques, on peut citer les bateaux pneumatiques, les bandages pneumatiques, les ballons ou balles utilisés pour le jeu ou le sport.

La couche étanche aux gaz de gonflage possède des propriétés d'étanchéité aux gaz de gonflage. Ces propriétés permettent de garantir un taux de perte de pression relativement faible et de maintenir l'objet pneumatique gonflé en état de fonctionnement normal pendant une durée suffisante, normalement de plusieurs semaines ou plusieurs mois.

Dans un bandage pneumatique, cette couche a, en outre, notamment pour fonction de protéger l'armature de carcasse de la diffusion d'air provenant de l'espace intérieur au bandage et d'éviter l'oxydation des différents constituants de cette armature.

Les propriétés d'étanchéité de la couche étanche aux gaz de gonflage peuvent être évaluées par toute technique usuelle connue de l'homme du métier, notamment par un test de perméabilité tel que décrit par exemple dans la demande WO2013/060858 au paragraphe I.4

### • Epaisseur de la couche étanche aux gaz de gonflage

L'homme de l'art saura, à la lumière de la présente description ajuster l'épaisseur de la couche étanche aux gaz de gonflage en fonction de l'application envisagée.

De préférence, le stratifié conforme à l'invention comprend au moins une couche étanche aux gaz de gonflage ayant une épaisseur supérieure ou égale à 0,4 mm.

De préférence, le stratifié conforme à l'invention comprend au moins une couche étanche aux gaz de gonflage ayant une épaisseur comprise dans un domaine allant de 0,4 à 2 mm, plus préférentiellement entre 0,6 à 1,2 mm.

L'épaisseur de la couche étanche aux gaz de gonflage est mesurée selon la méthode décrite ci-dessus.

### • Film d'agents de démoulage à la surface de la couche étanche aux gaz de gonflage

Selon un mode de réalisation préférée de l'invention, la couche étanche aux gaz de gonflage peut avoir à sa surface un film d'agents de démoulage. Par « surface de la couche étanche de gaz de gonflage », on entend la surface qui est en contact avec les gaz de gonflage qui sont dans la cavité de l'objet pneumatique. Par « film », on entend une pellicule d'une matière (ou composition) déposée à la surface d'un support. L'épaisseur d'un film est inférieure à l'épaisseur d'une couche.

Le film d'agents de démoulage et son utilisation sont bien connus des manufacturiers d'objets pneumatiques. De manière habituelle, ce film est appliqué à la surface de la couche non réticulée étanche aux gaz de gonflage selon toute technique bien connue de l'homme du métier. En effet, la couche étanche aux gaz de gonflage (ou paroi interne d'un bandage pneumatique) présente un fort pouvoir collant à cru. Afin d'éviter que le bandage pneumatique cru lors ne colle à la membrane de cuisson de la presse de vulcanisation et n'endommage cette presse, il est usuel de déposer un film d'agents de démoulage sur cette paroi interne. Ce film d'agents agit comme une couche protectrice anti-collante.

Préférentiellement, le film d'agents de démoulage comprenant au moins un polymère siliconé ou d'un mélange de polymères siliconés et du talc. Préférentiellement, le film d'agents de démoulage est constitué d'un polymère siliconé ou d'un mélange de polymères siliconés et de talc.

Le film d'agents de démoulage peut, par exemple, être obtenu en pulvérisant une suspension aqueuse d'un ou plusieurs polymères siliconés et de talc sur la surface de la couche étanche aux gaz de gonflage non réticulée.

Préférentiellement, le film d'agents de démoulage a une épaisseur strictement inférieure à 0,5 mm.

Préférentiellement, le film d'agents de démoulage a une épaisseur comprise dans un domaine allant de 0,02 à 0,3 mm.

L'épaisseur du film d'agents de démoulage est mesurée selon la méthode décrite ci-dessus.

Lorsque ce film d'agent de démoulage est présent à la surface de la couche étanche aux gaz de gonflage, les couches du stratifié conforme à l'invention sont superposées de la manière suivante : la couche étanche aux gaz de gonflage (éventuellement réticulée), un film d'agent de démoulage, la couche de liaison et la couche auto-obturante.

### 3.1.2 - Couche de liaison et couche auto-obturante :

### □ Constituants communs de ces couches

Comme mentionné ci-dessus, le stratifié multicouche conforme à l'invention comprend au moins une couche de liaison et au moins une couche auto-obturante, ces couches pouvant notamment comprendre des constituants communs.

### • Elastomères

### ∘ Elastomère thermoplastique styrénique

Par soucis de concision, on détaillera dans les paragraphes suivants les caractéristiques communes à l'élastomère thermoplastique styrénique utilisable dans la composition de la couche de liaison et celui utilisable dans la composition de la couche auto-obturante).

Les élastomères thermoplastiques styréniques (en abrégé «TPS») font partie, de manière connue, de la famille des élastomères thermoplastiques (en abrégé «TPE»). De structure intermédiaire entre polymères thermoplastiques et élastomères, ils sont constitués de blocs rigides thermoplastiques styréniques reliés par des séquences souples élastomères.

Les élastomères thermoplastiques styréniques utilisables pour la mise en œuvre de l'invention sont des copolymères à blocs dont la nature chimique des blocs thermoplastiques et des blocs élastomères peuvent varier.

### Structure de l'élastomère thermoplastique styrénique

La masse molaire moyenne en nombre (notée Mn) de l'élastomère thermoplastique styrénique utilisable dans la composition de la couche de liaison ou dans celle de la couche auto-obturante est préférentiellement inférieure ou égale à 500000 g/mol. Plus préférentiellement, elle est comprise dans un domaine allant de 30000 à 500000 g/mol, de préférence de 40000 à 400000 g/mol, plus préférentiellement encore de 50000 g/mol à 300000 g/mol. En dessous des minima indiqués, la cohésion entre les chaînes d'élastomère de ces élastomères thermoplastiques styréniques, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée « à chaud ». Par ailleurs, une masse Mn trop élevée peut être pénalisante pour la mise en œuvre. Ainsi, on a constaté qu'une valeur comprise dans un domaine préféré de 50000 à 300000 g/mol était particulièrement bien adaptée, notamment pour une utilisation de cet élastomère thermoplastique styrénique dans une composition d'une couche de liaison et d'une couche auto-obturante du stratifié conforme à l'invention.

La masse molaire moyenne en nombre (Mn), la masse molaire moyenne en poids (Mw) et l'indice de polydispersité (Ip) de ces élastomères thermoplastiques styréniques est déterminée de manière connue, par chromatographie d'exclusion stérique (SEC) triple détection telle que décrite ci-dessus.

La valeur de l'indice de polydispersité Ip (rappel : Ip = Mw/Mn avec Mw masse molaire moyenne en poids et Mn masse molaire moyenne en nombre) de ces élastomères thermoplastiques styréniques est de préférence inférieure à 3 ; plus préférentiellement inférieure à 2 et encore plus préférentiellement inférieure à 1,5.

De manière connue, les TPS présentent deux pics de température de transition vitreuse, la température la plus basse étant relative à la partie élastomère du TPS, et la température la plus haute étant relative à la partie thermoplastique styrénique du TPS. Ainsi, les blocs souples des TPS se définissent par une Tg inférieure à la température ambiante (25°C), tandis que les blocs rigides ont une Tg supérieure ou égale à 80°C.

Dans la présente demande, lorsqu'il est fait référence à la température de transition vitreuse de ces élastomères thermoplastiques styréniques, il s'agit de la Tg relative au bloc élastomère. Ces élastomères thermoplastiques styréniques présentent préférentiellement une Tg qui est préférentiellement inférieure à 25°C, plus préférentiellement inférieure ou égale à 10°C. Une valeur de Tg supérieure à ces minima peut diminuer les performances des compositions de la couche de liaison ou de celle de la couche auto-obturante lors d'une utilisation à très basse température ; pour une telle utilisation, la Tg de ces élastomères thermoplastiques styréniques est plus préférentiellement encore inférieure ou égale à -10°C. De manière préférentielle également, la Tg de ces élastomères thermoplastiques styréniques est supérieure ou égale à -100°C.

Pour être de nature à la fois élastomère et thermoplastique, ces élastomères thermoplastiques styréniques doivent être munis de blocs suffisamment incompatibles (c'est-à-dire différents du fait de leur masse, de leur polarité ou de leur Tg respectives) pour conserver leurs propriétés propres de bloc élastomère ou thermoplastique.

Les TPS peuvent être des copolymères avec un petit nombre de blocs (moins de 5, typiquement 2 ou 3), auquel cas ces blocs ont de préférence des masses élevées, supérieures à 15000 g/mol. Ces TPS peuvent être par exemple des copolymères diblocs, comprenant un bloc thermoplastique styrénique et un bloc élastomère. Ce sont souvent aussi des élastomères triblocs avec deux segments rigides reliés par un segment souple. Les segments rigides et souples peuvent être disposés linéairement, en étoile ou branchés. Typiquement, chacun de ces segments ou blocs contient souvent au minimum plus
de 5, généralement plus de 10 unités de base (par exemple unités styrène et unités butadiène pour un copolymère blocs styrène/ butadiène/ styrène).

Les TPS peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPS seront appelés TPS multiblocs par la suite, et sont un enchaînement blocs élastomères - blocs thermoplastiques styréniques.

Selon une première variante, ces élastomères thermoplastiques styréniques se présentent sous une forme linéaire. Par exemple, ces élastomères thermoplastiques styréniques sont des copolymères diblocs : bloc thermoplastique / bloc élastomère. Ces élastomères thermoplastiques styréniques peuvent aussi être des copolymères triblocs : bloc thermoplastique / bloc élastomère / bloc thermoplastique, c'est-à-dire un bloc élastomère central et de deux blocs thermoplastiques terminaux, à chacune des deux extrémités du bloc élastomère. Egalement, ces élastomères thermoplastiques styréniques multiblocs peuvent être un enchaînement linéaire de blocs élastomères - blocs thermoplastiques.

Selon une autre variante de l'invention, ces élastomères thermoplastiques styréniques utiles pour les besoins de l'invention se présentent sous une forme étoilée à au moins trois branches. Par exemple, ces élastomères thermoplastiques styréniques peut alors se composer d'un bloc élastomère étoilé à au moins trois branches et d'un bloc thermoplastique styrénique, situé à l'extrémité de chacune des branches du bloc élastomère. Le nombre de branches de ces élastomères peut varier, par exemple de 3 à 12, et de préférence de 3 à 6.

Selon une autre variante de l'invention, ces élastomères thermoplastiques styréniques se présentent sous une forme branchée ou dendrimère. Ces élastomères thermoplastiques styréniques peuvent alors se composer d'un bloc élastomère branché ou dendrimère et d'un bloc thermoplastique styrénique, situé à l'extrémité des branches du bloc élastomère dendrimère.

### Nature des blocs élastomères des élastomères thermoplastiques styréniques

Les blocs élastomères de l'élastomère thermoplastique styrénique de la composition de la couche de liaison et celui de la composition de la couche auto-obturante, pour les besoins de l'invention, peuvent être tous élastomères connus de l'homme de l'art. Ils possèdent de préférence une Tg inférieure à 25°C, préférentiellement inférieure à 10°C, plus préférentiellement inférieure à 0°C et très préférentiellement inférieure à -10°C. De manière préférentielle également, la Tg bloc élastomère de ces élastomères thermoplastiques styréniques est supérieure à -100°C.

Pour les blocs élastomères à chaîne carbonée, si le bloc élastomère du TPS comporte des insaturations éthyléniques (c'est-à-dire des doubles liaisons carbone - carbone), on parlera alors d'un bloc élastomère insaturé ou diénique (ou élastomère thermoplastique styrénique insaturé). Si le bloc élastomère du TPS ne comporte pas d'insaturation éthylénique, on parlera d'un bloc élastomère saturé (ou élastomère thermoplastique styrénique saturé).

Dans le cas des blocs élastomères insaturés, ce bloc élastomère de l'élastomère thermoplastique styrénique est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50 %, plus préférentiellement de plus de 75 % et encore plus préférentiellement de plus de 85 %. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄-C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères diéniques polymérisés pour former la partie élastomère de l'élastomère thermoplastique styrénique peuvent être copolymérisés, de manière statistique, avec au moins un autre monomère de manière à former un bloc élastomère insaturé. Selon cette variante, la fraction molaire en monomère polymérisé autre qu'un monomère diénique, par rapport au nombre total de motifs du bloc élastomère, doit être telle que ce bloc garde ses propriétés d'élastomère. Avantageusement la fraction molaire de cet autre co-monomère peut aller de 0 à 50 %, plus préférentiellement de 0 à 45 % et encore plus préférentiellement de 0 à 40 %.

A titre d'illustration, cet autre monomère susceptible de copolymériser avec le monomère diénique peut être choisi parmi les monomères éthyléniques tels que l'éthylène, le propylène, le butylène, les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, il représente avantageusement une fraction molaire en motifs sur le nombre total de motifs du bloc thermoplastique de 0 à 50 %, préférentiellement allant de 0 à 45 % et encore plus préférentiellement allant de 0 à 40 %. A titre de composés vinylaromatiques conviennent notamment les monomères styréniques cités plus bas, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère de l'élastomère thermoplastique styrénique est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50 %, plus préférentiellement de plus de 75 %, préférentiellement de plus de 85 %, plus préférentiellement de plus de 90 % et encore plus préférentiellement de plus de 95 %.

A titre d'illustration, les autres monomères susceptibles de copolymériser avec le monomère éthylénique peuvent être choisis parmi les monomères diènes (tels que définis ci-dessous, plus particulièrement, les monomères diènes conjugués ayant 4 à 14 atomes de carbone tels que définis ci-après (par exemple le butadiène), les monomères de type vinylaromatiques ayant de 8 à 20 atomes de carbone tels que définis ci-après ou encore, il peut s'agir d'un monomère tel que l'acétate de vinyle.

Lorsque le co-monomère est de type vinylaromatique, le taux pondéral de ce co-monomère par rapport au poids total du bloc élastomère est compris dans un domaine allant de 0 à 50 %, préférentiellement allant de 0 à 45% et encore plus préférentiellement allant de 0 à 40 %. A titre de composés vinylaromatiques conviennent notamment les monomères styréniques cités plus bas, notamment le styrène, les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Lorsque le co-monomère est de type diénique, le taux pondéral de ce co-monomère par rapport au poids total du bloc élastomère est compris dans un domaine allant de 0 à 15%, préférentiellement allant de 0 à 10% et encore plus préférentiellement allant de 0 à 5%. A titre de co-monomère diénique conviennent notamment les diènes conjugués en C₄-C₁₄. Il s'agit dans ce cas de copolymères statistiques. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, le 1-vinyl-1,3-cyclohexadiène ou leur mélange. Plus préférentiellement le diène conjugué est l'isoprène ou un mélange contenant de l'isoprène.

De préférence, les blocs élastomères de ces élastomères thermoplastiques styréniques présentent au total, une masse molaire moyenne en nombre (« Mn ») allant de 25000 à 350000 g/mol, de préférence de 35000 à 250000 g/mol de manière à conférer à ces élastomères thermoplastiques styréniques de bonnes propriétés élastomériques et une tenue mécanique suffisante et compatible avec l'utilisation dans des compositions constituant la couche de liaison et la couche auto-obturante du stratifié conforme à l'invention.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

### Nature des blocs thermoplastiques styréniques des élastomères thermoplastiques styréniques

La proportion des blocs thermoplastiques styréniques par rapport à l'élastomère thermoplastique styrénique, tel que défini pour l'utilisation dans les compositions de la couche de liaison et de la couche auto-obturante, est déterminée notamment par les propriétés de thermoplasticité que doit présenter lesdits copolymères. Les blocs thermoplastiques styréniques sont préférentiellement présents dans des proportions suffisantes pour préserver le caractère thermoplastique de ces élastomères utilisables dans les compositions de la couche de liaison et de la couche auto-obturante du stratifié de l'invention. Le taux minimum de blocs thermoplastiques styréniques dans ces élastomères thermoplastiques styréniques peut varier en fonction des conditions d'utilisation de ces copolymères. D'autre part, la capacité de ces élastomères thermoplastiques styréniques à se déformer lors de la préparation de la composition de la couche de liaison et de celle de la couche auto-obturante peut également contribuer à déterminer la proportion des blocs thermoplastiques styréniques.

Les blocs thermoplastiques styréniques sont obtenus à partir de monomères styréniques.

Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

De préférence, le taux pondéral de monomères styréniques (de préférence le monomère styrène), dans ces élastomères thermoplastiques styréniques, est compris entre 5 % et 50 %. En dessous du minimum indiqué, le caractère thermoplastique de ces élastomères risque de diminuer de manière sensible tandis qu'au-dessus du maximum préconisé, l'élasticité de la composition de la couche de liaison et de celle de la couche auto-obturante peuvent être affectées. Pour ces raisons, le taux pondéral de de monomères styréniques (de préférence le monomère styrène) dans ces élastomères thermoplastiques styréniques est plus préférentiellement compris entre 10 % et 40 %.

De préférence, les blocs thermoplastiques de ces élastomères thermoplastiques styréniques présentent au total, une masse molaire moyenne en nombre (« Mn ») allant de 5000 g/mol à 150000 g/mol, de manière à conférer à ces élastomères thermoplastiques styréniques de bonnes propriétés élastomériques et une tenue mécanique suffisante et compatible avec l'utilisation dans des compositions pour une couche de liaison et une couche auto-obturante.

Le bloc thermoplastique peut également être constitué de plusieurs blocs thermoplastiques tels que définis ci-dessus.

### Exemples d'élastomères thermoplastiques styréniques

Les élastomères thermoplastiques styréniques sont bien connus de l'homme du métier et sont disponibles dans le commerce auprès de la société Kraton ou bien de la société Kaneka par exemple.

### ∘ Autres élastomères

La composition de la couche de liaison et de celle de la couche auto-obturante peuvent éventuellement comprendre au moins un (c'est-à-dire un ou plusieurs) élastomère diénique.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non). Ces élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15 % (% en mole). Dans la catégorie des élastomères diéniques « essentiellement insaturés », on entend en particulier par élastomère diénique « fortement insaturé » un élastomère diénique ayant un taux de motifs d'origine diénique (diènes conjugués) qui est supérieur à 50 % (% en mole). C'est ainsi que des élastomères diéniques tels que certains caoutchoucs butyle ou les copolymères de diènes et d'alpha oléfines type EPDM peuvent être qualifiés d'élastomères diéniques « essentiellement saturés » (taux de motifs d'origine diénique faible ou très faible, toujours inférieur à 15 % (% en mole). Ces définitions étant données, on entend plus particulièrement par élastomère diénique, quelle que soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une alpha-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyle), ainsi que les versions halogénées, en particulier chlorées ou bromées, de ce type de copolymère.

De préférence, l'élastomère diénique est choisi dans le groupe constitué par les polybutadiènes (en abrégé « BR »), les polyisoprènes de synthèse (en abrégé « IR »), le caoutchouc naturel (en abrégé « NR »), les copolymères de butadiène, les copolymères d'isoprène et les mélanges de ces élastomères.

### • Huile d'extension

Le troisième constituant essentiel de la composition de la couche de liaison est une huile d'extension (ou huile plastifiante), utilisée à un taux élevé, d'au moins 140 pce et ayant une masse moyenne moléculaire en nombre inférieure ou égale à 5000 g/mol.

La deuxième constituant essentiel de la composition de la couche auto-obturante est une d'extension (ou huile plastifiante), utilisée à un taux élevé, d'au moins 140 pce et ayant une masse moyenne moléculaire en nombre inférieure ou égale à 5000 g/mol.

On peut utiliser, dans la présente invention quel que soit le type de couche, toute huile d'extension, de préférence à caractère faiblement polaire, apte à étendre, plastifier des élastomères thermoplastiques styréniques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines, en particulier tackifiantes, qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie dans le groupe constitué par les huiles polyoléfiniques, les huiles paraffiniques et les mélanges de ces huiles.

Plus préférentiellement encore, l'huile d'extension est une huile polyoléfinique ou un mélange d'huiles polyoléfiniques. Cette huile a démontré le meilleur compromis de propriétés comparativement aux autres huiles testées, notamment à une huile conventionnelle du type paraffinique.

Plus préférentiellement encore, l'huile d'extension est une huile polyoléfinique choisie dans le groupe constitué par les huiles polybutènes et les mélanges de ces huiles.

Plus préférentiellement encore, l'huile d'extension est choisie dans le groupe constitué par les huiles polyisobutylènes et les mélanges de ces huiles.

A titre d'exemples, des huiles polyisobutylènes sont commercialisées notamment par la société Univar sous la dénomination « Dynapak Poly » (ex. « Dynapak Poly 190 »), par BASF sous les dénominations « Glissopal » (ex. « Glissopal 1000 »), par la société INEOS sous les dénominations « H100 », « H300 », « H1200 », « H1500 » ou « H1900 »; des huiles paraffiniques sont commercialisées par exemple par ExxonMobil sous les dénominations «Primol 352», « Primol 382 » ou «Primol 542 » ou sous les dénominations « Flexon815 » ou « Flexon715 ».

### • Autres additifs

La composition de la couche de liaison et celle de la couche auto-obturante peuvent comprendre en outre divers additifs. Typiquement, ces additifs sont présents en faible quantité (préférentiellement à des taux inférieurs à 10 pce, plus préférentiellement inférieurs à 5 pce), et sont par exemple, des charges renforçantes tels que du noir de carbone, des charges non renforçantes ou inertes telles que définies ci-dessus, des agents de protection tels que des anti-UV, anti-oxydants ou anti-ozonants, divers autres stabilisants, des agents colorants avantageusement utilisables pour la coloration de la composition auto-obturante.

### □ Couche auto-obturante

Comme indiqué précédemment, le stratifié conforme à l'invention comprend au moins une couche auto-obturante constituée d'une composition à base d'au moins un élastomère thermoplastique styrénique et d'au moins 140 pce d'une huile d'extension ayant une masse moyenne en nombre Mn inférieure ou égale à 5 000 g/mol ; le taux d'élastomère thermoplastique styrénique étant compris dans un domaine allant de 50 à 100 pce.

L'homme de l'art saura, à la lumière de la présente description ajuster la formulation de la composition de la couche auto-obturante afin d'atteindre les niveaux de propriétés souhaités et adapter à la formulation à l'application envisagée.

### • Constitution de la couche auto-obturante

Dans la couche auto-obturante du stratifié de l'invention, est utilisé au moins un élastomère thermoplastique styrénique tel que défini précédemment, avec toute les préférences de structure, de nature chimique des blocs thermoplastiques et élastomériques exprimées précédemment.

Selon un mode de réalisation de la composition de la couche auto-obturante, l'élastomère thermoplastique styrénique est choisi dans le groupe constitué par les élastomères thermoplastiques styréniques saturés et les mélanges de ces élastomères.

Dans ce mode de réalisation, préférentiellement, l'élastomère thermoplastique styrénique saturé de la composition de la couche auto-obturante est choisi dans le groupe constitué par les copolymères styrène/éthylène/butylène (SEB), les copolymères styrène/éthylène/propylène (SEP), les copolymères styrène/éthylène/éthylène/propylène (SEEP), les copolymères styrène/éthylène/butylène/styrène (SEBS), les copolymères styrène/éthylène/propylène/styrène (SEPS), les copolymères styrène/éthylène/éthylène/propylène/styrène (SEEPS) et les mélanges de ces copolymères.

Plus préférentiellement encore, l'élastomère thermoplastique styrénique saturé de la composition de la couche auto-obturante est choisi dans le groupe constitué par les copolymères styrène/éthylène/butylène/styrène (SEBS), les copolymères styrène/éthylène/propylène/styrène (SEPS) et les mélanges de ces copolymères.

Préférentiellement, l'élastomère thermoplastique styrénique saturé de la composition de la couche auto-obturante est identique à l'élastomère thermoplastique styrénique saturé de la couche de liaison, y compris dans ses variantes préférées.

Selon un autre mode de réalisation de la composition de la couche auto-obturante, l'élastomère thermoplastique styrénique est choisi dans le groupe constitué par les élastomères thermoplastiques styréniques insaturés et les mélanges de ces élastomères.

Dans ce mode de réalisation, de manière préférée, l'élastomère thermoplastique styrénique insaturé de la composition de la couche auto-obturante est choisi dans le groupe constitué par les copolymères styrène/butadiène (SB), les copolymères styrène/isoprène (SI), les copolymères styrène/butadiène/butylène (SBB), les copolymères styrène/butadiène/isoprène (SBI), les copolymères styrène/butadiène/styrène (SBS), les copolymères styrène/butadiène/butylène/styrène (SBBS), les copolymères styrène/isoprène/styrène (SIS), les copolymères styrène/butadiène/isoprène/styrène (SBIS) et les mélanges de ces copolymères.

Quelle que soit la nature chimique de l'élastomère thermoplastique styrénique utilisable, la composition de la couche auto-obturante comprend une huile d'extension ayant une masse moyenne en nombre Mn inférieure ou égale à 5000 g/mol telle que décrite précédemment, avec toute les préférences de structure, de nature chimique exprimées ci-avant.

De préférence l'huile d'extension de la composition de la couche auto-obturante est choisie dans le groupe constitué par les huiles polyoléfiniques, les huiles paraffiniques, les huiles naphténiques, les huiles aromatiques, les huiles minérales, et les mélanges de ces huiles.

Préférentiellement, l'huile d'extension de la composition de la couche auto-obturante est une huile polyoléfinique choisie dans le groupe constitué par les huiles polybutènes et les mélanges de ces huiles.

Préférentiellement, l'huile d'extension de la composition de la couche auto-obturante est choisie dans le groupe constitué par les huiles polyisobutylènes et les mélanges de ces huiles.

De préférence, la masse molaire moyenne en nombre (Mn) de l'huile d'extension de la composition de la couche auto-obturante est comprise dans un domaine allant de 300 à 5000 g/mol, plus préférentiellement encore comprise entre 350 et 3000 g/mol. Pour des masses Mn inférieures à 300 g/mol, cette dernière pourrait migrer à l'extérieur de la couche auto-obturante, tandis que des masses supérieures à 5000 g/mol pourraient entraîner une rigidification excessive de la couche auto-obturante.

La masse molaire moyenne en nombre (Mn), la masse molaire moyenne en poids (Mw) et l'indice de polydispersité (Ip) de l'huile d'extension utilisable dans les compositions de la couche auto-obturante est déterminée de manière connue par chromatographie d'exclusion stérique (SEC : Size Exclusion Chromatography) triple détection telle que décrite ci-avant.

Préférentiellement, l'huile d'extension de la composition de la couche auto-obturante est identique ou différente de l'huile d'extension de la couche de liaison, plus préférentiellement identique à celle de la couche de liaison.

De préférence, le taux d'huile d'extension de la couche auto-obturante est compris dans un domaine allant de 140 à 700 pce, plus préférentiellement de 145 à 600 pce. En dessous du minimum indiqué, la couche auto-obturante risque de présenter une rigidité trop forte pour certaines applications tandis qu'au-delà du maximum préconisé, on s'expose à un risque de cohésion insuffisante de la couche auto-obturante. Pour cette raison, le taux d'huile d'extension est plus préférentiellement compris entre 140 et 700 pce, pour une utilisation de la couche auto-obturante dans un stratifié multicouche.

Préférentiellement, la composition de la couche auto-obturante peut comprendre en outre une polyoléfine, ayant une masse molaire moyenne en nombre Mn allant de 10000 à 550000 g/mol, différente de la polyoléfine de la composition de la couche de liaison.

Préférentiellement, la composition de la couche auto-obturante peut comprendre en outre divers additifs, tels que par exemple au moins un élastomère diénique, une charge renforçante ou non renforçante, etc. Ces additifs ont été décrits ci-dessus. Ils sont présents à de faible quantité (préférentiellement à des taux inférieurs à 10 pce).

Une couche auto-obturante particulièrement préférée et utilisable dans le stratifié conforme à l'invention est une couche constituée d'une composition à base d'au moins un élastomère thermoplastique styrénique saturé triblocs styrénique, une polyoléfine ayant une masse molaire moyenne en nombre Mn allant de 10000 à 550000 g/mol et d'au moins 140 pce d'une huile d'extension ayant une masse ayant une masse moyenne en nombre Mn inférieure ou égale à 5000 g/mol. Cette couche auto-obturante présente avantageusement des propriétés d'auto-obturation améliorées, quelle que soit la forme de l'objet perforant, par rapport aux compositions auto-obturantes constituée d'un élastomère styrénique saturé triblocs et d'une huile d'extension. Un objet perforant est un objet effilé à paroi lisse ou bien à paroi comportant un filet.

### • Fonction de la couche auto-obturante

La couche auto-obturante utilisable dans le stratifié multicouche conforme à l'invention est constitué d'une composition élastomérique relativement souple et pouvant fluer facilement afin de refermer une perforation ayant eu lieu dans un objet pneumatique et de rétablir l'étanchéité de cet objet.

Cette couche auto-obturante lorsqu'elle est déposée sur la paroi interne d'un objet pneumatique évite ainsi une perte de pression consécutive à une perforation par un objet effilé. En d'autres termes, la couche auto-obturante lorsqu'elle est disposée dans un objet pneumatique, tel qu'un bandage pneumatique, a des propriétés anti-crevaison. Elle sert de couche de protection anti-crevaison.

Les propriétés auto-obturante de la couche d'auto-obturation peuvent être évaluées par toute technique usuelle connue de l'homme du métier, notamment par un test de la résistance à une perte de pression tel que décrit dans l'ensemble du document WO2013/121019A1.

### • Epaisseur de la couche auto-obturante

L'homme de l'art saura, à la lumière de la présente description ajuster l'épaisseur de la couche auto-obturante en fonction de l'application envisagée.

Préférentiellement, le stratifié conforme à l'invention comprend au moins une couche auto-obturante ayant une épaisseur supérieure ou égale à 2 mm.

Préférentiellement, le stratifié conforme à l'invention comprend au moins une couche auto-obturante ayant une épaisseur comprise dans un domaine allant de 2 à 6 mm.

L'épaisseur de la couche auto-obturante est mesurée selon la méthode décrite ci-dessus.

### □ Couche de liaison

Comme indiqué précédemment, le stratifié conforme à l'invention comprend au moins une couche de liaison constituée d'une composition à base d'au moins un élastomère thermoplastique styrénique, d'au moins une polyoléfine ayant une masse molaire moyenne en nombre Mn allant de 10 000 g/mol à 550 000 g/mol et d'au moins 140 pce d'une huile d'extension ayant une masse ayant une masse moyenne en nombre Mn inférieure ou égale à 5 000 g/mol.

### • Constitution de la couche de liaison

Dans la couche de liaison, est utilisé au moins un élastomère thermoplastique styrénique tel que défini précédemment, avec toute les préférences de structure, de nature chimique des blocs thermoplastiques et élastomériques exprimées précédemment.

Préférentiellement, l'élastomère thermoplastique styrénique utilisable dans les compositions de la couche de liaison est choisi dans le groupe constitué par les élastomères thermoplastiques styréniques saturés et les mélanges de ces élastomères.

Préférentiellement, l'élastomère thermoplastique styrénique utilisable dans les compositions de la couche de liaison du stratifié multicouche conforme à l'invention est un copolymère dont la partie élastomère est saturée, et comportant des blocs styréniques et des blocs alkylènes. Les blocs alkylènes sont préférentiellement de l'éthylène, du propylène ou du butylène.

Préférentiellement, l'élastomère thermoplastique styrénique saturé de la composition de la couche de liaison est choisi dans le groupe constitué par les copolymères styrène/éthylène/butylène (SEB), les copolymères styrène/éthylène/propylène (SEP), les copolymères styrène/éthylène/éthylène/propylène (SEEP), les copolymères styrène/éthylène/butylène/styrène (SEBS), les copolymères styrène/éthylène/propylène/styrène (SEPS), les copolymères styrène/éthylène/éthylène/propylène/styrène (SEEPS) et les mélanges de ces copolymères.

Préférentiellement, l'élastomère thermoplastique styrénique saturé de la composition de la couche de liaison est choisi dans le groupe constitué par les élastomères thermoplastiques styréniques triblocs saturés et les mélanges de ces élastomères.

Plus préférentiellement encore, l'élastomère thermoplastique styrénique utilisable dans les compositions de la couche de liaison du stratifié multicouche conforme à l'invention est un copolymère dont la partie élastomère est saturée, et comportant trois blocs : deux blocs styréniques et un bloc alkylène. Les blocs alkylènes sont préférentiellement de l'éthylène, du propylène ou du butylène.

De préférence, l'élastomère thermoplastique styrénique triblocs saturé de la composition de la couche de liaison est choisi dans le groupe constitué par les copolymères styrène/éthylène/butylène/styrène (SEBS), les copolymères styrène/éthylène/propylène/styrène (SEPS) et les mélanges de ces copolymères.

Préférentiellement, l'élastomère thermoplastique styrénique, notamment saturé, notamment triblocs, de la composition de la couche de liaison a une masse molaire moyenne en nombre Mn est inférieure ou égale à 500000 g/mol.

Préférentiellement, l'élastomère thermoplastique styrénique, notamment saturé, et notamment triblocs, de la composition de la couche de liaison a une masse molaire moyenne en nombre Mn comprise dans un domaine allant de 30000 à 500000 g/mol, de préférence de 40000 à 400000 g/mol, plus préférentiellement encore de 50000 à 300000 g/mol.

L'homme du métier saura, à la lumière de la description et des exemples de réalisation qui suivent, ajuster la quantité d'élastomère thermoplastique styrénique dans la composition de la couche de liaison en fonction des conditions particulières d'usage de cette couche, notamment en fonction du stratifié dans lequel elle est destinée à être utilisée.

Préférentiellement, le taux d'élastomère thermoplastique styrénique, notamment saturé, et notamment triblocs, dans la composition de la couche de liaison est supérieur ou égal à 10 pce, de préférence est compris dans un domaine allant 20 à 80 pce, de préférence est compris dans un domaine allant de 25 à 75 pce.

A titre d'exemples de ces élastomères thermoplastiques styréniques notamment saturés, et notamment triblocs, commercialement disponibles, on peut citer les élastomères de type SEPS, SEEPS, ou SEBS commercialisés par la société Kraton sous la dénomination «Kraton G » (ex. produits G1650, G1651, G1654, G1730) ou la société Kuraray sous la dénomination « Septon » (ex. « Septon 2007 », « Septon 4033 », « Septon 8004 »).

Comme décrit précédemment, la composition de la couche de liaison comprend au moins une (c'est-à-dire une ou plusieurs) polyoléfine ayant une masse molaire moyenne en nombre Mn allant de 10000 g/mol à 550000 g/mol.

La masse molaire moyenne en nombre (Mn) la masse molaire moyenne en poids (Mw) et l'indice de polydispersité (Ip) de la polyoléfine utilisable dans les compositions de la couche de liaison est déterminée de manière connue par chromatographie d'exclusion stérique (SEC : Size Exclusion Chromatography) triple détection telle que décrite ci-avant.

Par « polyoléfine », on entend au sens de la présente demande un polymère aliphatique essentiellement saturé obtenu par polymérisation d'au moins un (c'est-à-dire un ou plusieurs) monomère oléfinique, c'est-à-dire ayant un taux pondéral de motifs d'origine oléfinique supérieur ou égal à 85 %. Un monomère oléfinique comporte une (et une seule) double liaison carbone-carbone.

Préférentiellement, la polyoléfine de la composition de la couche de liaison comprend des unités issues de monomères oléfiniques ayant de 4 à 8 atomes de carbone.

Le taux pondéral en unités issues de monomères oléfiniques ayant de 4 à 8 atomes de carbone est supérieur ou égal à 85 %, préférentiellement supérieur ou égal à 90 % et en encore plus préférentiellement supérieur ou égal à 95 % en poids par rapport au poids total de la polyoléfine.

A titre d'illustration, les autres monomère susceptibles de copolymériser avec le monomère oléfinique ayant de 4 à 8 atomes de carbone peut être choisi parmi les monomères diènes (tels que définis ci-dessous, plus particulièrement, les monomères diènes conjugués ayant 4 à 14 atomes de carbone tels que définis ci-après (par exemple le butadiène). Le taux pondéral de ce co-monomère par rapport au poids total de la polyoléfine est compris dans un domaine allant de 0 à 15 %, préférentiellement allant de 0 à 10 % et encore plus préférentiellement allant de 0 à 5 %.

A titre de co-monomère diénique conviennent notamment les diènes conjugués en C₄-C₁₄. Il s'agit dans ce cas de copolymères statistiques. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, le 1-vinyl-1,3-cyclohexadiène ou leur mélange. Plus préférentiellement le diène conjugué est l'isoprène ou un mélange contenant de l'isoprène.

Préférentiellement, la polyoléfine est constituée d'unités issues d'un ou plusieurs monomères oléfiniques ayant de 4 à 8 atomes de carbone.

Préférentiellement, les monomères oléfiniques ayant de 4 à 8 atomes de carbone de cette polyoléfine sont choisis dans le groupe constitué par le but-1-ène, le but-2-ène (isomères cis et trans du but-2-ène), le 2-méthylpropène, le pent-1-ène, le pent-2-ène, le 2-méthyl-1-butène, le 2-méthyl-2-butène, le 3-méthyl-1-butène, l'hex-1-ène, le 4-méthyl-1-pentène, le 3-méthyl-1-pentène, le hept-1-ène, l'oct-1-ène et les mélanges de ces monomères oléfiniques.

Préférentiellement, la polyoléfine comprend des unités issues de monomères oléfiniques ayant 4 atomes de carbone choisis dans le groupe constitué par le but-1-ène, le but-2-ène (isomères cis et trans du but-2-ène), le 2-méthylpropène et les mélanges de ces monomères.

Préférentiellement, la polyoléfine est constituée d'unités issues de monomères oléfiniques ayant 4 atomes de carbone choisis dans le groupe constitué par le but-1-ène, le but-2-ène (isomères cis et trans du but-2-ène), le 2-méthylpropène et le mélange de ces monomères.

Préférentiellement, la polyoléfine de la composition de la couche de liaison est constituée d'unités issues de monomères 2-méthylpropène. Autrement dit, la polyoléfine est un polyisobutylène (PIB).

Préférentiellement, la polyoléfine a une masse molaire moyenne en nombre Mn allant de 30000 g/mol à 1000000 g/mol; de préférence 30000 à 500000 g/mol, de préférence allant de à 50000 à 450000 g/mol.

Préférentiellement, la polyoléfine a un indice de polydispersité Ip compris dans un domaine allant de 1,1 à 6, de préférence allant de 1,3 à 5.

Préférentiellement, le taux de polyoléfine dans la composition de la couche de liaison est supérieur ou égal à 10 pce, de préférence est compris dans un domaine allant 10 à 90 pce, plus préférentiellement est compris dans un domaine allant de 20 à 80 pce, plus préférentiellement encore est compris dans un domaine allant de 25 à 75 pce.

Les polyoléfines utilisables dans la composition de la couche de liaison peuvent être obtenues, par exemple, par tout procédé connu de l'homme du métier par exemple polymérisation en suspension ou en phase gaz avec des catalyseurs de type Ziegler-Natta ou métallocène.

Lorsque la polyoléfine est un polyisobutylène (PIB), elle peut aussi être obtenue par polymérisation à partir d'isobutylène en présence d'un catalyseur de type acide de Lewis tels que du chlorure d'aluminium AlCl₃ ou du trifluorure de bore BF₃.

Ces polyoléfines sont disponibles commercialement auprès de fournisseurs tels que BASF par exemple sous la référence Oppanol B50, Oppanol N50.

Dans la couche de liaison, est utilisée au moins d'au moins 140 pce d'une huile d'extension ayant une masse ayant une masse moyenne en nombre Mn inférieure ou égale à 5000 g/mol ; l'huile d'extension étant telle que définie précédemment, y compris avec les préférences de nature chimique, etc..

Préférentiellement, l'huile d'extension de la composition de la couche de liaison est choisie dans le groupe constitué par les huiles polyoléfiniques, les huiles paraffiniques, les huiles naphténiques, les huiles aromatiques, les huiles minérales, et les mélanges de ces huiles.

Préférentiellement, l'huile d'extension de la composition de la couche de liaison est choisie dans le groupe constitué par les huiles polyoléfiniques, les huiles paraffiniques et les mélanges de ces huiles.

Préférentiellement, l'huile d'extension de la composition de la couche de liaison est une huile polyoléfinique choisie dans le groupe constitué par les huiles polybutènes et les mélanges de ces huiles.

Préférentiellement, l'huile d'extension de la composition de la couche de liaison est choisie dans le groupe constitué par les huiles polyisobutylènes et les mélanges de ces huiles.

Préférentiellement, l'huile d'extension de la composition de la couche de liaison a une masse molaire moyenne en nombre Mn de l'huile d'extension est comprise dans un domaine allant de 300 à 5000 g/mol, de préférence de 350 à 3000 g/mol.

L'homme du métier saura, à la lumière de la description et des exemples de réalisation qui suivent, ajuster la quantité d'huile d'extension dans la composition en fonction des conditions particulières d'usage de la couche de liaison, notamment en fonction de l'objet pneumatique dans lequel elle est destinée à être utilisée.

Préférentiellement, le taux d'huile d'extension dans la composition de la couche de liaison est compris dans un domaine allant de 145 et 500 pce, de préférence de 145 à 400 pce, plus préférentiellement de 145 à 350 pce.

Préférentiellement, la composition de la couche de liaison peut comprend en outre divers additifs, tels que par exemple au moins un élastomère diénique, une charge renforçante ou non renforçante, etc. Ces additifs ont été décrits ci-dessus. Ils ont présents à de faible quantité (préférentiellement à des taux inférieur à 10 pce).

### • Epaisseur

Préférentiellement, le stratifié conforme à l'invention comprend une couche de liaison ayant une épaisseur inférieure ou égale à 1,5 mm.

Préférentiellement, le stratifié conforme à l'invention comprend une couche de liaison ayant une épaisseur comprise dans un domaine allant de 0,05 à 0,5mm.

L'épaisseur de la couche de la liaison est mesurée selon la méthode décrite ci-dessus.

### • Fonction

La couche de liaison du stratifié conforme à l'invention est une couche située entre la couche étanche aux gaz de gonflage et la couche auto-obturante, (éventuellement si un film d'agents de démoulage est présent à la surface de la couche étanche aux gaz de gonflage, la couche de liaison est une couche situé entre ledit film et la couche auto-obturante).

De manière surprenante, par rapport aux compositions de l'art antérieur, cette couche de liaison favorise l'adhésion entre une couche auto-obturante et une couche étanche aux gaz de gonflage, notamment réticulée.

Grâce à la combinaison spécifique d'au moins un élastomère thermoplastique styrénique, d'au moins une polyoléfine et d'au moins une huile d'extension à un taux élevé, il a été possible de faire adhérer une composition auto-obturante sur une couche élastomérique étanche aux gaz de gonflage qui a notamment été préalablement vulcanisée. Ce résultat peut potentiellement s'expliquer par la comptabilité des trois constituants de la composition de la couche de liaison avec les constituants des deux autres couches adjacentes ; ces trois constituants formant une couche ayant un certain pouvoir tackifiant favorisant l'assemblage de la couche auto-obturante à la couche étanche aux gaz de gonflage, notamment lorsque cette dernière est réticulée.

De préférence, le ratio du taux exprimé en pce de la polyoléfine de la couche de liaison sur le taux exprimé en pce de l'huile d'extension de la couche de liaison est supérieur ou égal à 1,5, de préférence supérieure ou égale à 2, de manière plus préférée est compris dans un domaine allant de 2 à 14. Avantageusement, ce ratio permet notamment obtenir des couches de liaison ayant de propriétés favorisant l'adhésion de la couche étanche aux gaz de gonflage et de la couche auto-obturante.

### 3.2. - Procédé de préparation du stratifié et son utilisation

Un autre objet de la présente invention concerne l'utilisation d'une couche de liaison pour fixer une couche auto-obturante sur une couche étanche aux gaz de gonflage, dans laquelle :
- ladite couche de liaison est constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol,
- ladite couche étanche aux gaz de gonflage est constituée d'une composition à base d'au moins un élastomère diénique et d'au moins un système de réticulation, le taux d'élastomère diénique étant compris dans un domaine allant de de 50 à 100 pce ; et
- la couche auto-obturante est constituée d'une composition à base d'au moins un élastomère thermoplastique styrénique et d'au moins 140 pce d'une huile d'extension ayant une masse moyenne en nombre Mn inférieure ou égale à 5000 g/mol ; le taux d'élastomère thermoplastique styrénique étant compris dans un domaine allant de 50 à 100 pce.

Selon un mode préférentiel de réalisation de l'utilisation, la couche étanche aux gaz de gonflage est réticulée.

Selon un mode préférentiel de réalisation de l'utilisation, la couche étanche aux gaz de gonflage présente à sa surface un film d'agents de démoulage.

Selon un mode préférentiel de réalisation de l'utilisation, la couche étanche aux gaz de gonflage constitue la paroi interne d'un objet pneumatique, tel que par exemple un bandage pneumatique.

Les modes de réalisation préférés de la couche de liaison, de la couche étanche aux gaz de gonflage et de la couche auto-obturante qui ont été décrits ci-dessus s'appliquent également à l'utilisation décrite ci-dessus.

Un autre objet de la présente invention concerne un procédé de fixation d'une couche auto-obturante sur la paroi interne d'un objet pneumatique, ladite couche auto-obturante étant constituée d'une composition à base d'au moins un élastomère thermoplastique styrénique et d'au moins 140 pce d'une huile d'extension ayant une masse moyenne en nombre Mn inférieure ou égale à 5000 g/mol ; le taux dudit élastomère thermoplastique styrénique étant compris dans un domaine allant de 50 à 100 pce , procédé dans lequel :
(a) on dispose d'un objet pneumatique dont la paroi interne est faite d'une couche étanche aux gaz de gonflage constituée d'une composition à base d'au moins un élastomère diénique et d'au moins un système de réticulation, le taux d'élastomère diénique étant compris dans un domaine allant de de 50 à 100 pce;
(b) on applique une couche de liaison sur ladite paroi interne ;
(c) on applique ladite couche auto-obturante sur ladite couche de liaison,
ladite couche de liaison étant constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol.

A l'issu du procédé, on obtient donc un stratifié qui utilisable dans un objet pneumatique.

Préférentiellement dans le procédé, la couche étanche aux gaz de gonflage présente à sa surface un film d'agents de démoulage.

Ce procédé est applicable à tout type d'objet pneumatique et est particulièrement intéressant lorsqu'on désire mettre en place une couche auto-obturante (couche de protection anti-crevaison) après la cuisson d'un bandage pneumatique.

Préférentiellement dans le procédé, l'objet pneumatique est un bandage pneumatique.

La paroi interne d'un objet pneumatique est la paroi qui est en contact avec le ou les gaz de gonflage.

Les modes de réalisation préférés de la couche de liaison, de la couche étanche aux gaz de gonflage et de la couche auto-obturante qui ont été décrits ci-dessus s'appliquent également à ce procédé de fixation.

Dans la première étape du procédé, on dispose d'un objet pneumatique dont la paroi interne est faite d'une couche étanche aux gaz de gonflage constituée d'une composition à base d'au moins un élastomère diénique et d'au moins un système de réticulation, le taux d'élastomère diénique étant compris dans un domaine allant de de 50 à 100 pce. Cet objet pneumatique peut être fabriqué par toute technique bien connue de l'homme du métier.

Par exemple, lorsque l'objet pneumatique est un bandage pneumatique, la couche étanche aux gaz de gonflage qui est non vulcanisée (les expressions non cuite ou non réticulée sont équivalentes) est déposée sur un tambour de fabrication, enroulée autour de ce tambour puis soudée par les techniques usuelles utilisées dans la fabrication d'un bandage pneumatique.

Plus précisément, couche étanche aux gaz de gonflage du stratifié de l'invention est préparée dans des mélangeurs appropriés, en utilisant deux phases de préparation successives selon une procédure générale bien connue de l'homme du métier :
- une première phase de travail ou malaxage thermomécanique (parfois qualifiée de phase « non-productive ») à haute température, jusqu'à une température maximale comprise entre 130°C et 200°C, de préférence entre 145°C et 185°C, suivie
- d'une seconde phase de travail mécanique (parfois qualifiée de phase « productive ») à plus basse température, typiquement inférieure à 120°C, par exemple entre 60°C et 100°C, phase de finition au cours de laquelle est incorporé le système de réticulation. De préférence le système de réticulation est un système de vulcanisation.

Selon un mode de réalisation préférentiel de l'invention, tous les constituants de base des compositions de cette couche, à l'exception du système réticulation (de préférence du système de vulcanisation), tels que les éventuelles charges, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C. La durée totale du malaxage, dans cette phase non-productive, est de préférence comprise entre 1 et 15 min.

Après refroidissement du mélange ainsi obtenu au cours de la première phase non-productive, on incorpore alors le système de réticulation (de préférence le système de vulcanisation) à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée aux dimensions désirées par exemple sous la forme d'une couche dont l'épaisseur a été précédemment indiquée. Cette couche étanche aux gaz de gonflage est ensuite disposée sur le tambour de confection.

On applique ensuite successivement sur cette couche étanche aux gaz de gonflage, tous les autres composants usuels du bandage pneumatique selon les techniques usuelles de fabrication d'un bandage pneumatique. On obtient ainsi un bandage pneumatique.

Dans la seconde étape du procédé de fixation de l'invention, on applique la couche de liaison sur ladite paroi interne, c'est-à-dire sur la couche étanche aux gaz de gonflage (ou éventuellement sur le film d'agent de démoulage si présent).

La couche de liaison peut être obtenue de façon usuelle, par exemple par incorporation des différents composants dans une extrudeuse bi-vis ou dans un mélangeur à pales, notamment à pales Z.

En particulier selon une première façon, un procédé d'obtention de la couche de liaison comprend une première étape qui consiste à incorporer dans une première étape l'élastomère thermoplastique styrénique et l'huile d'extension ayant une masse ayant une masse moyenne en nombre Mn inférieure ou égale à 5 000 g/mol dans une extrudeuse bi-vis équipée d'un nombre suffisant de zones de convoyage, de cisaillement et de rétention de façon à réaliser la fusion dudit élastomère et une incorporation de ladite huile d'extension. L'extrudeuse bi-vis peut être tout type d'extrudeuse bi-vis dont le rapport L/D entre la longueur et le diamètre de la vis est compris dans un domaine allant de 20 à 40, équipée d'une trémie pour l'alimentation dudit élastomère thermoplastique styrénique et au moins d'une pompe d'injection liquide sous pression pour ladite huile d'extension. Au point d'introduction dudit élastomère thermoplastique styrénique, la température est proche de la température ambiante (23°C). Elle est ensuite portée plus loin le long de la vis à une valeur sensiblement supérieure à la température de fusion dudit élastomère thermoplastique styrénique retenu et est comprise dans un domaine allant de 220 à 290°C. Au point d'introduction de ladite huile d'extension, la température est également comprise dans un domaine allant de 220 à 290°C. Au point de sortie de l'extrudeuse, la température est comprise dans un domaine allant de 110 à 170°C. L'extrudeuse est pourvue en sa sortie d'une filière permettant de mettre en forme le produit aux dimensions souhaitées. Le débit global de sortie est compris dans un domaine allant de 3 à 10 kg/h.

Dans une seconde étape, on introduit le produit d'extrusion obtenu dans l'étape précédente et la polyoléfine ayant une masse molaire moyenne en nombre Mn allant de 10000 g/mol à 550000 g/mol à l'aide d'une trémie dans une extrudeuse mono-vis ou bis-vis dont le rapport L/D entre la longueur et le diamètre de la vis est compris dans un domaine allant de 10 à 30. La température au point d'introduction par les trémies du produit d'extrusion de l'étape précédente et de ladite polyoléfine est comprise dans un domaine allant de 100 à 180°C en entrée de vis. En sortie de vis, on diminue la température qui est alors comprise dans un domaine allant de 100 à 150°C. L'extrudeuse est pourvue en sa sortie d'une filière permettant de mettre en forme la couche de liaison aux dimensions souhaitées.

Lorsqu'on utilise des élastomères thermoplastiques styréniques tels que des SEPS ou des SEBS déjà étendus avec de forts taux d'huiles, on peut effectuer alors uniquement la deuxième étape d'extrusion pour obtenir la couche de liaison. Les élastomères thermoplastiques styréniques déjà étendus sont bien connus et disponibles commercialement. A titre d'exemples, on peut citer les produits commercialisés par la société Hexpol TPE sous la dénomination « Dryflex » (e.g. « Dryflex 967100 ») ou « Mediprene » (e.g. « Mediprene 500000M »), ceux vendus par Multibase sous dénomination « Multiflex » (e.g. « Multiflex G00 »).

Une autre façon classique d'obtenir la couche de liaison consiste en l'utilisation d'un mélangeur à pales Z, par exemple du type MK LII 1 de la société Linden d'une capacité utile d'un litre, dans lequel sont chargés l'élastomère thermoplastique styrénique, l'huile d'extension ayant une masse ayant une masse moyenne en nombre Mn inférieure ou égale à 5000 g/mol et la polyoléfine ayant une masse molaire moyenne en nombre Mn allant de 10000 g/mol à 550000 g/mol et les éventuels additifs. La cuve du mélangeur est chauffée pour que le mélange atteigne une température comprise dans un domaine allant de 80 à 140°C selon le nombre d'ingrédients utilisés. La vitesse des pales est sélectionnée dans un domaine allant de 10 à 100 tours/min et la durée de mélangeage est choisie dans un domaine allant de 30 min à 24 heures. L'homme du métier sait ajuster chacun de ces paramètres afin d'obtenir un mélange homogène qui sera ensuite utilisé comme couche de liaison. Dans ce cas on obtient un « batch » qui ne présente pas de mise en forme particulière et qui sera par la suite calandré aux dimensions souhaitées.

Dans la troisième étape du procédé de fixation de l'invention, on applique la couche auto-obturante sur la couche de liaison, par exemple en mettant en contact ladite couche auto-obturante et ladite couche de liaison

La couche auto-obturante peut être obtenue de façon usuelle, par exemple par incorporation des différents composants dans une extrudeuse bi-vis ou dans un mélangeur à pales, notamment à pales Z.

En particulier, la couche auto obturante peut être obtenue en mettant en œuvre la première étape du procédé d'obtention de la couche de liaison tel que décrit ci-dessus.

Selon une première variante du procédé de fixation de la présente invention, le procédé peut comprendre une étape (d) dans laquelle on cuit l'objet pneumatique obtenu à l'issue de l'étape (c). Selon cette variante, la couche de liaison et la couche auto-obturante sont appliquées sur la paroi interne de l'objet pneumatique avant cuisson.

Avant cuisson, cela consiste à poser la couche de liaison telle que définie ci-dessus, y compris ses variantes préférées, sur la couche étanche aux gaz de gonflage (ou paroi interne), c'est-à-dire à appliquer cette couche de sous forme d'une couche d'épaisseur inférieure ou égale à 1,5 mm sur la couche étanche aux gaz de gonflage non réticulée, puis appliquer la couche auto-obturante sur cette couche de liaison et enfin de procéder à la cuisson du bandage pneumatique. Il peut être nécessaire de protéger la couche auto-obturante avec une couche anti-collante ou un film de protection. La couche anti-collante ou le film de protection facilite la fabrication du bandage pneumatique en limitant les contacts directs entre la couche anti-crevaison et les outils d'assemblage de l'ébauche du pneumatique ou entre la couche anti-crevaison et la membrane des presses de cuisson. Ces couches anti-collantes ou films de protection ainsi que leur utilisation sont bien connus de l'homme du métier.

Selon une deuxième variante préférée du procédé de fixation de l'invention, le procédé peut comprendre une étape intermédiaire (a') dans laquelle, on cuit l'objet pneumatique. Selon cette variante, la couche de liaison et la couche auto-obturante sont appliquées sur la paroi interne de l'objet pneumatique après cuisson dudit objet pneumatique.

Après cuisson, cela consiste à poser la couche de liaison telle que définie ci-dessus (y compris ces modes préférés de réalisation) sur la couche étanche aux gaz de gonflage (ou paroi interne) déjà cuite (vulcanisée, réticulée). La couche de liaison est appliquée par tout moyen approprié, comme par exemple par collage, par pulvérisation ou encore extrusion et soufflage d'une couche d'épaisseur inférieure ou égale à 1,5 mm. Puis, la couche auto-obturante est appliquée sur la couche de liaison par tout moyen approprié, comme par exemple par collage, par pulvérisation ou encore extrusion et soufflage d'un couche d'épaisseur supérieur ou égale à 2 mm.

Selon un mode de réalisation, cette pose de la couche de liaison peut se faire sur une couche réticulée étanche aux gaz de gonflage dont le film d'agents de démoulage aura été préalablement retiré, notamment par grattage ou par dissolution avec des solvants.

Selon un autre mode de réalisation, la pose de la couche de liaison, y compris de ses versions préférées, peut également se faire directement sur le film d'agents de démoulage qui se trouve à la surface de la couche étanche aux gaz de gonflage cuite. Ce mode de réalisation est avantageux puisqu'il ne nécessite plus l'emploi d'un grattoir ou de solvant pour retirer le film d'agents de démoulage. Il en résulte un gain de temps et de sécurité pour le manufacturier. Préférentiellement, on dépose donc une couche de liaison sur le film d'agents de démoulage, puis on vient déposer la couche auto-obturante sur la couche de liaison selon des techniques bien connues de l'homme du métier.

L'étape de cuisson est bien connue de l'homme du métier et peut s'effectuer selon toutes techniques habituellement utilisées dans le domaine de fabrication d'objet pneumatique (tel que les bandages pneumatiques).

Le stratifié multicouche de l'invention peut aussi être préparé indépendamment de l'objet pneumatique dans lequel il est ou sera utilisé. Par exemple, le stratifié multicouche est préparé selon les méthodes connues de l'homme de l'art, en préparant séparément les trois couches du stratifié, puis en associant la couche étanche aux gaz de gonflage, notamment après la cuisson de cette dernière à la couche de liaison, puis en associant la couche auto-obturante à la couche de liaison. L'association de différentes couches peut se faire par exemple par simple traitement thermique, de préférence sous pression (par exemple quelques min à 150°C sous 16 bars).

Un autre objet de la présente invention concerne l'utilisation d'un stratifié multicouche conforme à l'invention et ses modes préférés de réalisation comme paroi interne d'un objet pneumatique, notamment d'un bandage pneumatique. Le stratifié multicouche selon l'invention peut être utilisé comme paroi interne dans un bandage pneumatique. Il confère ainsi à ce bandage des propriétés d'étanchéité aux gaz de gonflage et des propriétés anti-crevaison. En outre, grâce à la couche de liaison, il permet une fabrication plus rapide et moins couteuse dudit bandage puisque la couche auto-obturante peut être appliquée sur la couche étanche aux gaz de gonflage réticulée. Il simplifie ainsi les étapes de cuisson.

### 3.3. - Objet pneumatique comprenant au moins un stratifié multicouche

Un autre objet de la présente invention concerne un objet pneumatique comprenant un stratifié tel que défini ci-dessus, y compris ses modes préférés de réalisation. Préférentiellement, ledit stratifié, y compris ses modes préférés de réalisation, constitue la paroi interne dudit objet pneumatique.

Préférentiellement, l'objet pneumatique comprenant un stratifié multicouche conforme à l'invention est un bandage pneumatique, notamment destiné à équiper des véhicules. Ces véhicules peuvent être des véhicules à moteur de type tourisme, des SUV (« *Sports Utility Vehicles* »), des deux roues (notamment motos), des avions, comme des véhicules industriels choisis parmi camionnettes, « Poids-lourd » - c'est-à-dire métro, bus, engins de transport routier (camions, tracteurs, remorques), des véhicules hors-la-route tels qu'engins agricoles ou de génie civil -, autres véhicules de transport ou de manutention.

L'objet pneumatique peut être fabriqué par toutes les techniques bien connues de l'homme du métier.

### 4. - EXEMPLE

Les exemples qui suivent illustrent l'invention sans toutefois la limiter.

On prépare les différentes couches suivantes qui sont ensuite assemblées pour former un stratifié dont la propriété d'adhésion de la couche de liaison sera testée par un test de pelage.

### 4.1. - Couche étanche aux gaz de gonflage

Les couches étanches aux gaz de gonflage sont constituées soit de la composition C1 soit de la composition C2.

### 4.1.1. - Formulation de la couche étanche aux gaz de gonflage

Les formulations des compositions C1 et C2 sont fournies dans le tableau I. Les taux sont exprimés en pce.

**Tableau I**

| Composition | **C1** | **C2** |
|---|---|---|
| Caoutchouc butyle bromé (a) | 100 | 100 |
| Noir de carbone (b) | 50 | 50 |
| Carbonate de calcium | 10 | (-) |
| Oxyde de zinc | 1,5 | 1,5 |
| Acide stéarique | 1,5 | 1,5 |
| Soufre | 1,5 | 1,5 |
| Accélérateur (c) | 1,5 | 1,5 |

| | | |
|---|---|---|
| (a) Caoutchouc butyle bromé commercialisé sous la référence Bromobutyle 7211 par la société ExxonMobil ; (b) Noir de carbone N772 commercialisé par la société Cabot Corporation ; (c) Disulfure de mercaptobenzothiazyle commercialisée sous la référence MBTS-MG par la société Akrochem | | |

### 4.1.2. - Préparation de la couche étanche aux gaz de gonflage

On prépare les couches étanches aux gaz de gonflage selon le procédé suivant.

On introduit dans un mélangeur interne, rempli à 70% et dont la température initiale de cuve est d'environ 60°C, successivement le noir de carbone, le caoutchouc butyle ainsi que divers autres ingrédients éventuels à l'exception du système de vulcanisation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore du soufre et l'accélérateur sur un mélangeur externe (homo-finisseur) à 30°C, en mélangeant le tout (phase productive) pendant un temps approprié (par exemple entre 5 et 12 min).

La composition obtenue à l'issue de la phase productive est ensuite calandrée soit sous la forme de feuilles fines de longueur 150 mm, de largeur 150 mm et d'épaisseur 2 mm, puis elle est cuite pendant 13 min à 180°C sous pression d'une dizaine de bars.

### 4.2. - Couche de liaison

Les couches de liaison sont constituées soit de la composition T soit de la composition A1, soit de la composition A2.

### 4.2.1. - Formulation de la couche de liaison

Les formulations des compositions T, A1 et A2 sont fournies dans le tableau II. Les taux sont exprimés en pce.

La composition T constitue la couche de liaison du stratifié représentatif de l'art antérieur WO2009/156049.

La composition A1 ou A2 constitue la couche de liaison du stratifié conforme à l'invention.

**Tableau II :**

| Composition | **T** | **A1** | **A2** |
|---|---|---|---|
| TPS (a) | 100 | (-) | (-) |
| TPS (b) | (-) | 37 | 63 |
| Polyoléfine (c) | (-) | 63 | 37 |
| Huile d'extension (d) | (-) | 211 | 250 |

| | | | |
|---|---|---|---|
| (a) Elastomère thermoplastique styrénique (TPS): copolymère bloc styrène/ polyisoprène/ styrène SIS commercialisé par la société Kraton sous la référence D1161 ; Mn = 220000 g/mol et Ip = 1,3; Mn et Ip mesurés selon la méthode décrite dans la description. (b) Elastomère thermoplastique styrénique (TPS): copolymère bloc styrène/ éthylène/ butylène/ styrène SEBS commercialisé par la société Kraton sous la référence G1654 ; Mn = 116000 g/mol et Ip = 1,1 ; Mn et Ip mesurés selon la méthode décrite dans la description. (c) Polyoléfine : polyisobutylène commercialisé par la société BASF sous la référence Oppanol N50 ; Mn = 400000 g/mol et Ip = 1,6 ; Mn et Ip mesurés selon la méthode décrite dans la description. (d) Huile d'extension : Huile polyisobutylène commercialisée par la société Univar sous la référence Dynapak 190 ; Mn = 1000 g/mol et Ip = 1,4. | | | |

### 4.2.2. - Préparation de la couche de liaison

### • Préparation de la couche de liaison constituée de la composition T

L'élastomère thermoplastique styrénique (SIS) est placé dans un moule contenant une cale de l'épaisseur souhaitée. L'ensemble est placé dans une presse électrique à plateaux de la marque CARVER pour obtenir le film par fusion dudit élastomère et moulage, soit à une température de 150°C pendant 10 min et sous 8 bar de pression.

### • Préparation de la couche de liaison constituée de la composition A1 ou A2

Les couches de liaison constituées des compostions A1 et A2 sont préparées de manière conventionnelle par extrusion en deux étapes de l'élastomère thermoplastique styrénique, de l'huile d'extension et de la polyoléfine.

Dans la première étape, l'élastomère thermoplastique styrénique et l'huile d'extension sont introduits dans une extrudeuse bi-vis L/D= 40 via une trémie d'alimentation pour ledit élastomère et une pompe d'injection liquide sous pression pour ladite huile d'extension. L'extrudeuse bi-vis est pourvue d'une filière plate permettant d'extruder le produit aux dimensions souhaitées. La température au point d'introduction de l'élastomère thermoplastique styrénique est à température ambiante (23°C). Elle est ensuite portée plus loin le long de la vis à une valeur sensiblement supérieure à la température de fusion de l'élastomère thermoplastique styrénique retenu c'est-à-dire entre 275°C. Au point d'introduction de l'huile, la température est également comprise entre 275°C. Au point de sortie de l'extrudeuse, la température est comprise entre 140°C. Le débit global est compris en sortie entre 4 kg/h.

Au cours de la deuxième étape, on introduit dans une extrudeuse bi-vis L/D=20 via des trémies le profilé obtenu par extrusion de la première étape et la polyoléfine. La température au point d'introduction par les trémies de la polyoléfine et du profilé précédent comprenant l'élastomère thermoplastique et l'huile d'extension est comprise entre 125°C en entrée de vis. En sortie de vis, la température est abaissée entre 125°C. La filière plate en sortie d'extrudeuse permet d'obtenir un profil de dimensions suivantes : longueur 150 mm, de largeur 150 mm et d'épaisseur 2 mm.

### 4.3. - Couche auto-obturante

Les couches auto-obturantes sont constituées soit de la composition B1 soit de la composition B2.

### 4.3.1. - Formulation de la couche auto-obturante

Les formulations des compositions B1 et B2 sont fournies dans le tableau III. Les taux sont exprimés en pce.

**Tableau III**

| Composition | **B1** | **B2** |
|---|---|---|
| TPS (a) | 100 | 100 |
| Huile d'extension (b) | 570 | 400 |

| | | |
|---|---|---|
| (a) Elastomère thermoplastique styrénique (TPS): copolymère bloc styrène/ éthylène/ butylène/ styrène SEBS commercialisé par la société Kraton sous la référence G1654 ; Mn = 116000 g/mol et Ip = 1,1; Mn et Ip mesurés selon la méthode décrite dans la description. (b) Huile d'extension : Huile polyisobutylène commercialisée par la société Univar sous la référence Dynapak 190 ; Mn = 1000 g/mol et Ip = 1,4 ; Mn et Ip mesurés selon la méthode décrite dans la description. | | |

### 4.3.2. - Préparation de la couche auto-obturante

Les couches auto-obturantes constituées des compositions B1 ou B2 sont préparées de manière conventionnelle par extrusion en une étape de l'élastomère thermoplastique styrénique et de l'huile d'extension.

Dans la première étape, l'élastomère thermoplastique styrénique et l'huile d'extension sont introduits dans une extrudeuse bi-vis L/D= 40 via une trémie d'alimentation pour l'élastomère et une pompe d'injection liquide sous pression pour l'huile d'extension. L'extrudeuse bi-vis est pourvue d'une filière plate permettant d'extruder le produit aux dimensions souhaitées. La température au point d'introduction de l'élastomère thermoplastique est à température ambiante (23°C). Elle est ensuite portée plus loin le long de la vis à une valeur sensiblement supérieure à la température de fusion de l'élastomère thermoplastique styrénique retenu c'est-à-dire entre 275°C. Au point d'introduction de l'huile, la température est également comprise entre 275°C. Au point de sortie de l'extrudeuse, la température est comprise entre 140°C. Le débit global est compris en sortie entre 4 kg/h. Cette extrudeuse est équipée d'une filière plate qui permet d'obtenir un profil de dimensions suivantes : longueur 150 mm, de largeur 150 mm et d'épaisseur 2 mm.

### 4.4. - Confection des stratifiés/éprouvettes et test de pelage

Les stratifiés multicouche sont testés quant à l'adhésion de la couche de liaison à la couche réticulée étanche aux gaz selon un test dit de pelage.

Les éprouvettes de pelage du type pelage à 180° sont réalisées de la manière suivante :
Une feuille d'une couche étanche aux gaz de gonflage vulcanisée de dimensions 150 mm par 150 mm et d'épaisseur 2 mm est disposée sur une couche de liaison de 0,3 mm d'épaisseur et de dimensions 150 mm par 150 mm. Sur la face encore disponible de la couche de liaison, on applique une couche auto-obstruante d'une épaisseur de 3 mm et de dimensions 150 mm par 150 mm. On applique à nouveau une couche de liaison de 0,3 mm de même composition que celle précédemment décrite et à nouveau pardessus une feuille d'une couche étanche aux gaz de gonflage vulcanisée de même composition que la précédente. Sur un des côtés de cet empilement, une amorce de rupture est insérée entre la feuille de couche étanche aux gaz de gonflage vulcanisée et la couche de liaison. Les dimensions de l'amorce sont : largeur 20 mm et longueur 150 mm. Cet empilement est placé sous une presse et une pression de 0,1-0,2 bar est appliquée pendant une minute et à température ambiante 23°C. Des éprouvettes de pelage sont obtenues en découpant des bandes d'une largeur de 30 mm d'une longueur de 150 mm au massicot en prenant soin d'avoir l'amorce à l'une des extrémités de l'éprouvette.

Les deux côtés de l'amorce de rupture ont été ensuite placés dans les mors d'une machine de traction de marque Instron. (Modèle 5569). La mesure de pelage s'effectue par traction à 180° et à une vitesse 100 mm/min à température à 23°C. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 150 mm). La valeur d'adhésion retenue correspond à l'initiation de la rupture au sein de l'éprouvette et donc à la valeur maximale de cette courbe.

### 4.5. - Essai

Le but de cet essai est de démontrer qu'un stratifié conforme à l'invention présente des propriétés d'adhésion améliorées par rapport au stratifié du document WO2009/156049A1 représentatif de l'art antérieur. Le stratifié de l'art antérieur permet une adhésion lorsque la couche auto-obturante est posée avant cuisson la couche étanche aux gaz de gonflage et que le bandage pneumatique est ensuite cuit mais, il ne permet pas l'adhésion de la couche auto-obturante lorsque celle-ci est posée après cuisson du bandage pneumatique.

On prépare les stratifiés multicouches ST1, SI1, SI2, SI3 et SI4 et on effectue une mesure de l'adhésion selon le paragraphe 4.4. La structure des stratifiés et les résultats du test de pelage sont présentés dans le tableau IV.

Le stratifié ST1 non conforme à l'invention est préparé avec une couche étanche aux gaz de gonflage réticulée sur laquelle on a essayé de déposer la couche adhésive et la couche auto-obturante décrites dans le document WO2009/156049A1.

Le stratifié SI1 conforme à l'invention se distingue du stratifié ST1 non conforme à l'invention par la formulation de la couche de liaison.

Les stratifiés SI2, SI3 et SI4 représentent d'autres modes de réalisation de l'invention.

Le stratifié SI2 diffère du stratifié SI1 par la formulation différente de la composition constituant la couche étanche aux gaz de gonflage.

Le stratifié SI3 diffère du stratifié SI2 par la formulation différente de la composition constituant la couche auto-obturante.

Le stratifié SI4 diffère du stratifié SI3 par la formulation différente de la composition constituant la couche de liaison.

**Tableau IV**

| Stratifié | ST1 | SI1 | SI2 | SI3 | SI4 |
|---|---|---|---|---|---|
| Compositions utilisées pour les couches | C1/T/B1 | C1/A1/B1 | C2/A1/B1 | C2/ A1 / B2 | C2/ A2 / B2 |
| Force (N/mm²) | 0 (*) | 0,2 | 0,2 | 0,5 | 0,3 |

| | | | | | |
|---|---|---|---|---|---|
| (*) : la valeur numérique zéro a été attribuée à ce stratifié car la confection de l'éprouvette n'a pas été possible du fait d'un manque d'adhésion des couches. | | | | | |

D'après le tableau IV, l'adhésion de la couche de liaison entre la couche auto-obturante et la couche étanche aux gaz de gonflage dans le stratifié ST1 non conforme n'est pas possible lorsque la couche étanche aux gaz de gonflage a été réticulée.

De manière surprenante, dans le stratifié SI1 conforme à l'invention (et les autres modes réalisation de l'invention) une adhésion de la couche auto-obturante sur la couche étanche aux gaz de gonflage réticulée via la couche de liaison est observée.

### 4.6 Exemple de pneumatique comprenant un stratifié multicouche

La figure 1 représente de manière schématique (sans respect d'une échelle spécifique), une coupe radiale d'un bandage pneumatique incorporant un stratifié conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Le bandage pneumatique 1 est caractérisé en ce que sa paroi interne comporte un stratifié multi-couches conforme à l'invention tel que défini ci-dessus, comprenant au moins trois couches 10a, 10b, 10c, une couche 10a auto-obturante telle que définie précédemment (y compris ces modes préférées de réalisation); une couche 10b de liaison telle que définie précédemment (y compris ces modes préférées de réalisation) et une couche 10c étanche aux gaz de gonflage telle que définie précédemment (y compris ces modes préférées de réalisation).

Conformément à un mode de réalisation préférentiel de l'invention, les trois couches 10a, 10b, 10c couvrent substantiellement toute la paroi interne du bandage pneumatique, se prolongeant d'un flanc à l'autre, au moins jusqu'au niveau du crochet de jante lorsque le bandage pneumatique est en position montée. Selon d'autres modes de réalisation possibles, la couche 10a auto-obturante et la couche de liaison 10b pourraient toutefois recouvrir uniquement une partie de la zone réticulée ou non et étanche aux gaz de gonflage (couche 10c), par exemple seulement la zone sommet du bandage pneumatique ou s'étendre au moins de la zone sommet jusqu'à mi-flanc (équateur) dudit bandage.

Selon un autre mode de réalisation préférentiel, le stratifié est disposé de telle manière que la couche 10a auto-obturante soit radialement la plus externe dans le bandage pneumatique, par rapport à la couche 10b de liaison, comme schématisé sur la figure 1. En d'autres termes, la couche 10a auto-obturante recouvre la couche 10b de liaison du côté de la cavité interne 11 du bandage pneumatique 1.

La couche 10c étanche aux gaz de gonflage permet donc le gonflement et le maintien sous pression du bandage 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

La couche 10a auto-obturante est disposée entre la couche 10b et la cavité 11 du pneumatique. Elle permet de procurer au pneumatique une protection efficace contre les pertes de pression dues aux perforations accidentelles, en permettant l'obturation automatique de ces perforations.

La couche 10b de liaison permet de favoriser l'adhésion entre la couche 10c étanche aux gaz de gonflage et la couche 10a auto-obturante, notamment lorsque la couche 10c étanche aux gaz de gonflage est préalablement réticulée avant la pose de la couche 10a auto-obturante.

Si un objet perforant tel qu'un clou ou une vis traverse la structure de l'objet pneumatique, par exemple une paroi telle qu'un flanc 3 ou le sommet 6 du bandage pneumatique 1, la couche auto-obturante conforme à l'invention sert de couche anti-crevaison ; elle subit plusieurs contraintes. En réaction à ces contraintes, et grâce à ses propriétés avantageuses de déformabilité et d'élasticité, ladite couche auto-obturante crée une zone de contact étanche tout autour de l'objet perforant. La souplesse de la couche auto-obturante permet à cette dernière de s'immiscer dans des ouvertures de taille minime quelle que soit la forme de l'objet perforant. Cette interaction entre la couche auto-obturante et l'objet perforant confère une étanchéité à la zone affectée par ce dernier.

En cas de retrait, accidentel ou volontaire, de l'objet perforant, une perforation reste : celle-ci est susceptible de créer une fuite plus ou moins importante, en fonction de sa taille. La couche auto-obturante, soumise à l'effet de la pression hydrostatique, est suffisamment souple et déformable pour obturer, en se déformant, la perforation, empêchant la fuite de gaz de gonflage. Dans le cas d'un bandage pneumatique notamment, il s'est avéré que la souplesse de la couche auto-obturante permettait de supporter sans problème les efforts des parois environnantes, même lors des phases de déformations du bandage pneumatique chargé et en roulage.

## Revendications

1. Stratifié pour objet pneumatique comportant au moins trois couches différentes et superposées:
- une couche étanche aux gaz de gonflage constituée d'une composition à base d'au moins un élastomère diénique et d'au moins un système de réticulation, le taux d'élastomère diénique étant compris dans un domaine allant de de 50 à 100 pce ;
- une couche de liaison constituée d'une composition à base d'au moins un élastomère thermoplastique styrénique, d'au moins une polyoléfine ayant une masse molaire moyenne en nombre Mn allant de 10000 à 550000 g/mol et d'au moins 140 pce d'une huile d'extension ayant une masse moyenne en nombre Mn inférieure ou égale à 5000 g/mol ;
- une couche auto-obturante constituée d'une composition à base d'au moins un élastomère thermoplastique styrénique et d'au moins 140 pce d'une huile d'extension ayant une masse moyenne en nombre Mn inférieure ou égale à 5 000 g/mol ; le taux d'élastomère thermoplastique styrénique étant compris dans un domaine allant de 50 à 100 pce ; et
ladite couche de liaison étant disposée entre ladite couche étanche aux gaz de gonflage et ladite couche auto-obturante.

2. Stratifié selon la revendication 1, dans lequel le taux d'élastomère thermoplastique styrénique de la composition de la couche de liaison est supérieur ou égal à 10 pce, de préférence est compris dans un domaine allant 20 à 80 pce, de préférence est compris dans un domaine allant de 25 à 75 pce.

3. Stratifié selon la revendication 1 ou 2, dans lequel la polyoléfine de la composition de la couche de liaison comprend des unités issues de monomères oléfiniques ayant de 4 à 8 atomes de carbone.

4. Stratifié selon l'une quelconque des revendications 1 à 3, dans lequel le taux de polyoléfine dans la composition de la couche de liaison est supérieur ou égal à 10 pce, de préférence est compris dans un domaine allant de 20 à 80 pce, de préférence de 25 à 75 pce.

5. Stratifié selon l'une quelconque des revendications 1 à 4, dans lequel le taux d'huile d'extension de la composition de la couche de liaison est compris dans un domaine allant de 145 et 500 pce, de préférence de 145 à 400, plus préférentiellement de 145 à 350 pce.

6. Stratifié selon l'une quelconque des revendications 1 à 5, dans lequel le taux d'huile d'extension de la composition de la couche auto-obturante est compris dans un domaine allant de 140 et 700 pce, de préférence de 145 à 600 pce.

7. Stratifié selon l'une quelconque des revendications 1 à 6, dans lequel la couche étanche aux gaz de gonflage a une épaisseur supérieure ou égale à 0,4 mm, de préférence comprise dans un domaine allant de 0,4 à 2 mm.

8. Stratifié selon l'une quelconque des revendications 1 à 7, dans lequel la couche de liaison a une épaisseur inférieure ou égale à 1,5 mm, de préférence comprise dans un domaine allant de 0,05 à 0,5 mm.

9. Stratifié selon l'une quelconque des revendications 1 à 8, dans lequel la couche auto-obturante a une épaisseur supérieure ou égale à 2 mm, de préférence comprise dans un domaine allant de 2 à 6 mm.

10. Utilisation d'un stratifié tel que défini dans l'une quelconque des revendications 1 à 9 comme paroi interne d'un objet pneumatique, notamment d'un bandage pneumatique.

11. Objet pneumatique comprenant un stratifié tel que défini selon l'une quelconque des revendications 1 à 9.

12. Objet pneumatique selon la revendication 11, **caractérisée en ce qu'**il est un bandage pneumatique.

13. Utilisation d'une couche de liaison pour fixer une couche auto-obturante sur une couche étanche aux gaz de gonflage, dans laquelle :
- ladite couche de liaison est constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol,
- ladite couche étanche aux gaz de gonflage est constituée d'une composition à base d'au moins un élastomère diénique et d'au moins un système de réticulation, le taux d'élastomère diénique étant compris dans un domaine allant de de 50 à 100 pce ; et
- la couche auto-obturante est constituée d'une composition à base d'au moins un élastomère thermoplastique styrénique et d'au moins 140 pce d'une huile d'extension ayant une masse moyenne en nombre Mn inférieure ou égale à 5000 g/mol ; le taux d'élastomère thermoplastique styrénique étant compris dans un domaine allant de 50 à 100 pce.

14. Utilisation selon la revendication 13, dans la couche étanche aux gaz de gonflage constitue la paroi interne d'un objet pneumatique, tel que par exemple un bandage pneumatique.

15. Procédé de fixation d'une couche auto-obturante sur la paroi interne d'un objet pneumatique, ladite couche auto-obturante étant constituée d'une composition à base d'au moins un élastomère thermoplastique styrénique et d'au moins 140 pce d'une huile d'extension ayant une masse moyenne en nombre Mn inférieure ou égale à 5000 g/mol ; le taux dudit élastomère thermoplastique styrénique étant compris dans un domaine allant de 50 à 100 pce , procédé dans lequel :
(a) on dispose d'un objet pneumatique dont la paroi interne est faite d'une couche étanche gaz de gonflage constituée d'une composition à base d'au moins un élastomère diénique et d'au moins un système de réticulation, le taux d'élastomère diénique étant compris dans un domaine allant de de 50 à 100 pce;
(b) on applique une couche de liaison sur ladite paroi interne ;
(c) on applique ladite couche auto-obturante sur la couche de liaison,
ladite couche de liaison étant constituée d'une composition à base d'au moins un élastomère thermoplastique styrénique, d'au moins une polyoléfine ayant une masse molaire moyenne en nombre Mn allant de 10000 g/mol à 550000 g/mol et d'au moins 140 pce d'une huile d'extension ayant une masse moyenne en nombre Mn inférieure ou égale à 5000 g/mol.

## Patentansprüche

1. Laminat für einen pneumatischen Gegenstand, welches wenigstens drei verschiedene und übereinander angeordnete Schichten aufweist:
- eine für Aufblasgase dichte Schicht, die aus einer Zusammensetzung auf der Basis wenigstens eines Dienelastomers und wenigstens eines Vernetzungssystems besteht, wobei der Anteil von Dienelastomer in einem Bereich von 50 bis 100 pce liegt;
- eine Verbindungsschicht, die aus einer Zusammensetzung auf der Basis wenigstens eines thermoplastischen Styrol-Elastomers, wenigstens eines Polyolefins mit einer zahlenmittleren molaren Masse Mn von 10000 bis 550000 g/mol und von wenigstens 140 pce eines Verlängerungsöls mit einer zahlenmittleren molaren Masse Mn, die kleiner oder gleich 5000 g/mol ist, besteht;
- eine selbstdichtende Schicht, die aus einer Zusammensetzung auf der Basis wenigstens eines thermoplastischen Styrol-Elastomers und von wenigstens 140 pce eines Verlängerungsöls mit einer zahlenmittleren molaren Masse Mn, die kleiner oder gleich 5000 g/mol ist, besteht; wobei der Anteil von thermoplastischem Styrol-Elastomer in einem Bereich von 50 bis 100 pce liegt; und
wobei die Verbindungsschicht zwischen der für Aufblasgase dichten Schicht und der selbstdichtenden Schicht angeordnet ist.

2. Laminat nach Anspruch 1, wobei Anteil von thermoplastischem Styrol-Elastomer an der Zusammensetzung der Verbindungsschicht größer oder gleich 10 pce ist, vorzugsweise in einem Bereich von 20 bis 80 pce liegt, vorzugsweise in einem Bereich von 25 bis 75 pce liegt.

3. Laminat nach Anspruch 1 oder 2, wobei das Polyolefin der Zusammensetzung der Verbindungsschicht Einheiten umfasst, die sich von Olefinmonomeren mit 4 bis 8 Kohlenstoffatomen ableiten.

4. Laminat nach einem der Ansprüche 1 bis 3, wobei der Anteil von Polyolefin in der Zusammensetzung der Verbindungsschicht größer oder gleich 10 pce ist, vorzugsweise in einem Bereich von 20 bis 80 pce, vorzugsweise 25 bis 75 pce liegt.

5. Laminat nach einem der Ansprüche 1 bis 4, wobei der Anteil von Verlängerungsöl an der Zusammensetzung der Verbindungsschicht in einem Bereich von 145 bis 500 pce, vorzugsweise von 145 bis 400, stärker bevorzugt von 145 bis 350 pce liegt.

6. Laminat nach einem der Ansprüche 1 bis 5, wobei der Anteil von Verlängerungsöl an der Zusammensetzung der selbstdichtenden Schicht in einem Bereich von 140 bis 700 pce, vorzugsweise von 145 bis 600 liegt.

7. Laminat nach einem der Ansprüche 1 bis 6, wobei die für Aufblasgase dichte Schicht eine Dicke aufweist, die größer oder gleich 0,4 mm ist, und vorzugsweise in einem Bereich von 0,4 bis 2 mm liegt.

8. Laminat nach einem der Ansprüche 1 bis 7, wobei die Verbindungsschicht eine Dicke aufweist, die kleiner oder gleich 1,5 mm ist, und vorzugsweise in einem Bereich von 0,05 bis 0,5 mm liegt.

9. Laminat nach einem der Ansprüche 1 bis 8, wobei die selbstdichtende Schicht eine Dicke aufweist, die größer oder gleich 2 mm ist, und vorzugsweise in einem Bereich von 2 bis 6 mm liegt.

10. Verwendung eines Laminats, wie in einem der Ansprüche 1 bis 9 definiert, als Innenwand eines pneumatischen Gegenstands, insbesondere eines Luftreifens.

11. Pneumatischer Gegenstand, welcher ein Laminat umfasst, wie gemäß einem der Ansprüche 1 bis 9 definiert.

12. Pneumatischer Gegenstand nach Anspruch 11, **dadurch gekennzeichnet, dass** er ein Luftreifen ist.

13. Verwendung einer Verbindungsschicht zum Befestigen einer selbstdichtenden Schicht auf einer für Aufblasgase dichten Schicht, wobei:
- die Verbindungsschicht aus einer Zusammensetzung auf der Basis wenigstens eines thermoplastischen Styrol-Elastomers, wenigstens eines Polyolefins mit einer zahlenmittleren molaren Masse Mn von 10000 bis 550000 g/mol und von wenigstens 140 pce eines Verlängerungsöls mit einer zahlenmittleren molaren Masse Mn, die kleiner oder gleich 5000 g/mol ist, besteht;
- die für Aufblasgase dichte Schicht aus einer Zusammensetzung auf der Basis wenigstens eines Dienelastomers und wenigstens eines Vernetzungssystems besteht, wobei der Anteil von Dienelastomer in einem Bereich von 50 bis 100 pce liegt; und
- die selbstdichtende Schicht aus einer Zusammensetzung auf der Basis wenigstens eines thermoplastischen Styrol-Elastomers und von wenigstens 140 pce eines Verlängerungsöls mit einer zahlenmittleren molaren Masse Mn, die kleiner oder gleich 5000 g/mol ist, besteht; wobei der Anteil von thermoplastischem Styrol-Elastomer in einem Bereich von 50 bis 100 pce liegt.

14. Verwendung nach Anspruch 13, wobei die für Aufblasgase dichte Schicht die Innenwand eines pneumatischen Gegenstands bildet, wie zum Beispiel eines Luftreifens.

15. Verfahren zur Befestigung einer selbstdichtenden Schicht auf der Innenwand eines pneumatischen Gegenstands, wobei die selbstdichtende Schicht aus einer Zusammensetzung auf der Basis wenigstens eines thermoplastischen Styrol-Elastomers und von wenigstens 140 pce eines Verlängerungsöls mit einer zahlenmittleren molaren Masse Mn, die kleiner oder gleich 5000 g/mol ist, besteht; wobei der Anteil des thermoplastischen Styrol-Elastomers in einem Bereich von 50 bis 100 pce liegt, wobei bei dem Verfahren:
(a) ein pneumatischer Gegenstand bereitgestellt wird, dessen Innenwand aus einer für Aufblasgase dichten Schicht hergestellt ist, die aus einer Zusammensetzung auf der Basis wenigstens eines Dienelastomers und wenigstens eines Vernetzungssystems besteht, wobei der Anteil von Dienelastomer in einem Bereich von 50 bis 100 pce liegt;
(b) eine Verbindungsschicht auf die Innenwand aufgebracht wird;
(c) die selbstdichtende Schicht auf die Verbindungsschicht aufgebracht wird,
wobei die Verbindungsschicht aus einer Zusammensetzung auf der Basis wenigstens eines thermoplastischen Styrol-Elastomers, wenigstens eines Polyolefins mit einer zahlenmittleren molaren Masse Mn von 10000 bis 550000 g/mol und von wenigstens 140 pce eines Verlängerungsöls mit einer zahlenmittleren molaren Masse Mn, die kleiner oder gleich 5000 g/mol ist, besteht.

## Claims

1. Laminate for pneumatic objects comprising at least three different and superimposed layers:
- a layer impermeable to inflation gases consisting of a composition based on at least one diene elastomer and on at least one crosslinking system, the content of diene elastomer being within a range from 50 to 100 phr ;
- a tie layer consisting of a composition based on at least one thermoplastic styrenic elastomer, at least one polyolefin having a number-average molar mass Mn ranging from 10,000 to 550,000 g/mol and at least 140 phr an extender oil having a number-average mass Mn less than or equal to 5,000 g/mol;
- a self-sealing layer consisting of a composition based on at least one thermoplastic styrenic elastomer and at least 140 phr of an extender oil having a number-average mass Mn less than or equal to 5,000 g/mol; the rate of thermoplastic styrenic elastomer being within a range from 50 to 100 phr; and
said tie layer being disposed between said layer impermeable to inflation gases and said self-sealing layer.

2. Laminate according to claim 1, wherein the rate of thermoplastic styrenic elastomer in the composition of the tie layer is greater than or equal to 10 phr, preferably is within a range of 20 to 80 phr, preferably is included. in an area ranging from 25 to 75 phr.

3. Laminate according to claim 1 or 2, wherein the polyolefin of the composition of the tie layer comprises units derived from olefinic monomers having 4 to 8 carbon atoms.

4. Laminate according to any one of claims 1 to 3, wherein the level of polyolefin in the composition of the tie layer is greater than or equal to 10 phr, preferably is in a range ranging from 20 to 80 phr, preferably 25 to 75 phr.

5. Laminate according to any one of claims 1 to 4, wherein the level of extender oil in the composition of the tie layer is in a range ranging from 145 and 500 phr, preferably from 145 to 400 , more preferably from 145 to 350 phr.

6. Laminate according to any one of claims 1 to 5, wherein the level of oil extending the composition of the self-sealing layer is within a range ranging from 140 to 700 phr, preferably from 145 to 600 phr.

7. Laminate according to any one of claims 1 to 6, wherein the inflation gas-tight layer has a thickness greater than or equal to 0.4 mm, preferably within a range of 0.4 to 2 mm.

8. Laminate according to any one of claims 1 to 7, wherein the tie layer has a thickness less than or equal to 1.5 mm, preferably within a range of 0.05 to 0.5 mm.

9. Laminate according to any one of claims 1 to 8, wherein the self-sealing layer has a thickness greater than or equal to 2 mm, preferably within a range of 2 to 6 mm.

10. Use of a laminate as defined in any one of claims 1 to 9 as the internal wall of a pneumatic object, in particular of a pneumatic tire.

11. A pneumatic object comprising a laminate as defined in any one of claims 1 to 9.

12. A pneumatic object according to claim 11, **characterized in that** it is a pneumatic tire.

13. Use of a tie layer to attach a self-sealing layer to an inflation gas-tight layer, in which:
- said tie layer consists of a composition based on at least one thermoplastic styrenic elastomer, at least one polyolefin having a number-average molar mass Mn ranging from 10,000 g/mol to 550,000 g/mol and at least 140 phr of an extension oil having a number-average mass Mn less than or equal to 5,000 g/mol,
- said layer impermeable to inflation gases consists of a composition based on at least one diene elastomer and at least one crosslinking system, the content of diene elastomer being within a range ranging from 50 to 100 phr; and
- the self-sealing layer consists of a composition based on at least one thermoplastic styrenic elastomer and at least 140 phr of an extension oil having a number-average mass Mn less than or equal to 5,000 g/mol; the rate of thermoplastic styrenic elastomer being within a range from 50 to 100 phr.

14. Use according to claim 13, in the inflation gas-tight layer constitutes the internal wall of a pneumatic object, such as for example a pneumatic tire.

15. A method of fixing a self-sealing layer on the internal wall of a pneumatic object, said self-sealing layer consisting of a composition based on at least one thermoplastic styrene elastomer and at least 140 phr. an extender oil having a number-average mass Mn less than or equal to 5,000 g/mol; the content of said thermoplastic styrenic elastomer being within a range ranging from 50 to 100 phr, process in which:
a) a pneumatic object is available, the inner wall of which is made of an inflation gas-tight layer consisting of a composition based on at least one diene elastomer and at least one crosslinking system, the rate diene elastomer being included in a range from 50 to 100 phr;
b) applying a tie layer to said inner wall;
c) said self-sealing layer is applied to the tie layer,
said tie layer consisting of a composition based on at least one thermoplastic styrenic elastomer, at least one polyolefin having a number-average molar mass Mn ranging from 10,000 g/mol to 550,000 g/mol and at least less 140 phr of an extension oil having a number-average mass Mn less than or equal to 5,000 g/mol.
